Europäisches Patentamt

European Patent Office

Office européen des brevets

(11) Publication number: **0 451 282 A1**

# EUROPEAN PATENT APPLICATION
## published in accordance with Art. 158(3) EPC

(21) Application number: 90913533.7

(22) Date of filing: 12.09.90

(86) International application number:
PCT/JP90/01169

(87) International publication number:
WO 91/04545 (04.04.91 91/08)

(51) Int. Cl.⁵: **G06F 15/72**

(30) Priority: 12.09.89 JP 236052/89
12.09.89 JP 236053/89
17.10.89 JP 270048/89
16.11.89 JP 297961/89
27.12.89 JP 339370/89
16.04.90 JP 99830/90

(43) Date of publication of application:
16.10.91 Bulletin 91/42

(84) Designated Contracting States:
DE FR GB

(71) Applicant: FUJITSU LIMITED
1015, Kamikodanaka Nakahara-ku
Kawasaki-shi Kanagawa 211(JP)

(72) Inventor: RYU, Tadamitsu
1-604, Konandai Kotohausu 1151-121,
Kamigocho
Sakae-ku Yokohama-shi Kanagawa 247(JP)
Inventor: GAMOH, Mineo
27-5, Uenashi
Yuki-shi Ibaragi 307(JP)
Inventor: TANIDA, Toshitsugu
577, Oaza Tagawa
Oyama-shi Tochigi 307-02(JP)

Inventor: WATANABE, Toshiki
W-10-222 Fujitsu Nakaharahausu 426,
Siboguchi
Takatsu-ku Kawasaki-shi Kanagawa 213(JP)
Inventor: UEDA, Kenichi
13-1, Asahicho 1-chome
Kawaguchi-shi Saitama 332(JP)
Inventor: ISONO, Etsuko
202, Sofare A 462-2, Ishibashi Ishibashicho
Simotsuga-gun Tochigi 329-05(JP)
Inventor: MOGI, Yoshio
102-4, Hiraicho
Tochigi-shi Tochigi 328(JP)
Inventor: FUKATSU, Takanori
101 Sankei Manshon 665, Miyazaki
Miyamae-ku
Kawasaki-shi Kanagawa 213(JP)
Inventor: KITAO, Taiji
101 c/o Wada 351-5, Chitose Takatsu-ku
Kawasaki-shi Kanagawa 213(JP)

(74) Representative: Lehn, Werner, Dipl.-Ing. et al
Hoffmann, Eitle & Partner Patentanwälte
Arabellastrasse 4
W-8000 München 81(DE)

(54) NETWORK SYSTEM CONSISTING OF TERMINALS HAVING DOCUMENT PREPARING FUNCTION.

(57) The invention relates to a document preparing method of a network system and its object is to mutually utilize documents among terminals. For this purpose, according to the present invention, there are provided with a component file (4) in which are registered coded elements of a document and coded conditions of the document preparation, a program file (6) comprising a program for preparing various documents, and an expansion table (8) for expanding the coded preparation conditions, elements and programs. The element codes for preparing documents and preparation condition codes are expand-

ed on the expansion table (8), and documents are prepared by combining the element codes and prep- aration condition codes.

Fig.1

[FIELD OF THE INVENTION]

The present invention relates to a network system consisting of terminal units providing a function to generate documents such as graphs and figures.

Documents generated by each terminal unit are registered, as the distributed data bases, to the files of terminal units for use by the other terminal units.

[BACKGROUND OF THE INVENTION]

A network coupling many termninals units has been introduced in general and thereby the documents such as graphs and figures generated by respective terminal units can be used as the distributed data bases in the network, enhancing necessity of utilization of documents.

Generation of documents such as graphs and figures in the terminal units of the conventional network system has ben conducted, for example, in generation of graphs, by inputting the object data for graph such as type of graph and kind of lines using a packaged graph generation program.

Moreover, in the figure generating process in the conventional terminal unit, an image of hand-written figure is input and data processing has been conducted for the filing.

Furthermore, in case a document such as graph and figure generated by the other terminal unit is used through display on the screen in the conventional network system, communication with the other terminal unit is carried out frequently and complicated procedures have also be required, namely the answer is returned each time in accordance with the conversation message display sent from the other terminal unit and thereafter the program is executed on the other terminal unit and the display as processing result is transmitted to the own terminal unit.

Moreover, display on the screen in the terminal unit of the conventional network system is usually possible only for a single screen including the window. Therefore if the function for continuous screen process is provided, it is allowed within the ranged fixed by the program and additional registration of screen and replacement of sequence have been impossible. In addition, a program must be prepared one by one for each aggregation of different screens for generation of different continuous screens and thereby remarkable number of programs has been required.

First, the conventional graph generating method and figure generating method will be explained with reference to Fig. 21 and Fig. 22, and the conventional screen processing method between terminal units will be explained with reference to Fig. 23 and Fig. 24.

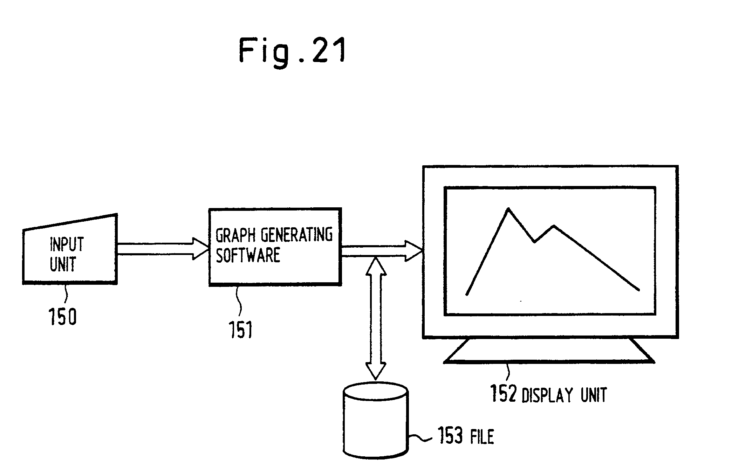

A graph generating method of the prior art will be explained with reference to Fig. 21.

First of all, a type of graph such as a graph of broken lines is designated by a packaged graph generating software from an input/output unti 150. Next, a graph generating condition such as a type polygonal lines and object data for generating graph are input.

A graph generating package software 151 edits athe graph in accordance with the generating condition input and object data in put for generating the graph.

An edited graph displays a generated graph on the display unit 152 such as display.

The generated graph is stored in a file 153 such as a flopply disk and such graph is then output to the display unit 152 as required.

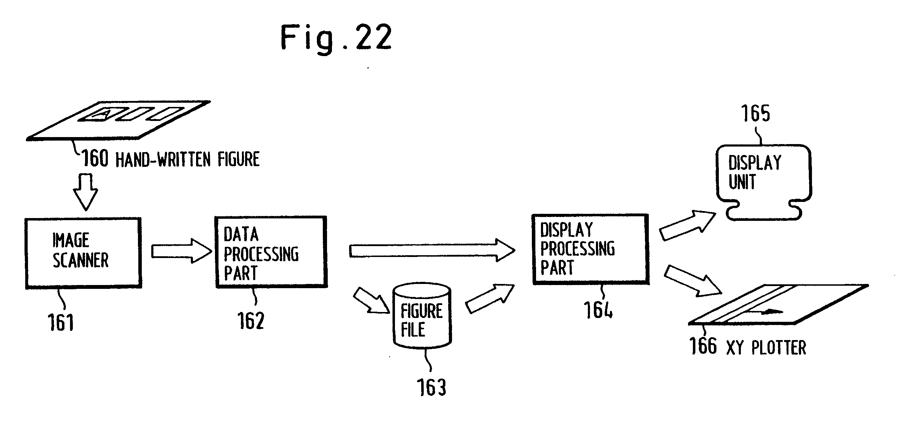

Next, a conventional figure generating method using an image scanner will be explained with reference to Fig. 22.

First, a required figure is generated by hand-writing method and the hand-written figure 160 is read with an image scanner and it is then input. The input figure data is processed in the image levl by a data processor 162 and the figure as the result has been output to a display unit 165 or X-Y plotter 166 owing to a display processor 164.

Moreover, the input digure data is stored in a figure file 163 and it can also be output to a display unit 165 or X-Y plotter 166 from the display processor 164 as required.

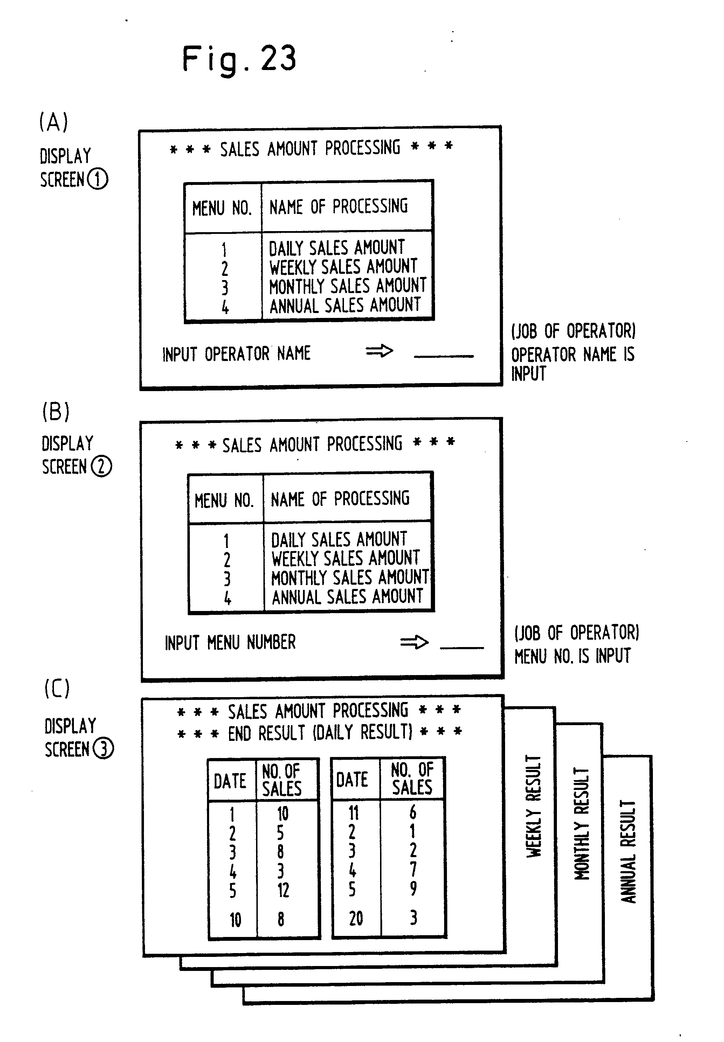

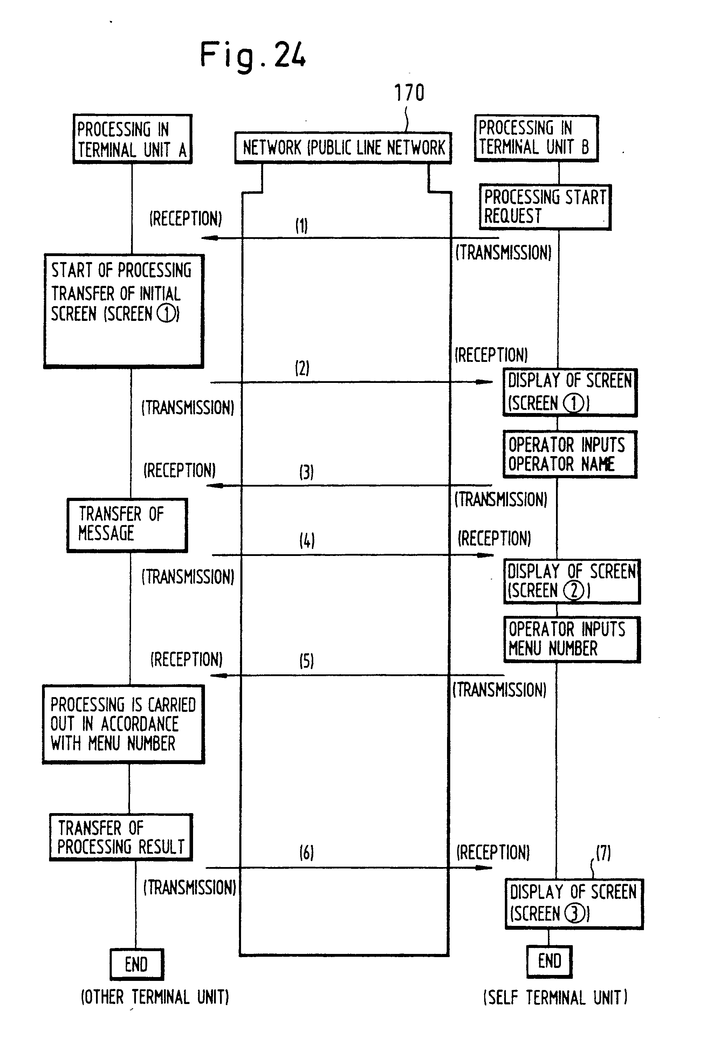

The conventional method for processing data between terminal units will be explained with reference to Fig. 23 and Fig. 24.

Explained as an example is the case where the other terminal unit A is provided with a function to display the necessary display screens 1 , 2 , 3 for "daily sales amount", "weekly sales amount", "monthly sales amount" and "annual sales amount" for processing as shown in Figs. 23 (A), (B) and (C) and such function is used in the own terminal unit.

In case the function provided in the other terminal units is used in the own terminal unit, the procedures based on the flowchart of Fig. 24 have been required.

In this figure, the terminal A is the other terminal unit, while the terminal B is the own terminal unit. Moreover, reference numeral 170 denotes a network such as public network.

The flowchart will be explained in the sequence of numbering.

(1) The terminal unit B sends a request for starting the "sales amount totalizing process" to the terminal unit A.

(2) When the terminal unit A receives this request, it starts the "sales amount totalizing process" and sends the display screen 1 shown in Fig. 23(A) to the terminal unit B.

(3) The display screen 1 is dispayed on the terminal unit B. Therefore, when an operator name is input in accordance with the designation "Input an operator name" on the display screen 1 , the result is sent to the terminal unit A.

(4) Upon reception of this result, the terminal unit A sends a conversational message "Input a menu number" to the terminal unit B.

(5) In the terminal unit B, the display screen 2 shown in Fig. 23(B) is displayed and an operator is urged to input the predetermined menu number "1". The result is then sent to the terminal unit A.

(6) The terminal unit A executes a program in accordance with the menu number "1" transmitted and sends the processing result to the terminal unit A as the display screen 3 shown in Fig. 24(C).

(7) The display screen 3 is displayed in the terminal unit B.

As explained above, in the conventional graph generating processing, the individual generating condition of the graph to be generated has been determined only for the generation program and it cannot be cnotrolled for common use in the other programs. Therefore, even when the graph to be generated is transferred to the other terminal units in the network system, it cannot ensure such applicability that another graph is generated by using only the numerical data as the object of graphic display or a figure of the same kind is generated by replacing a part of the graph generating condition with the other conditions and then changing and extending the graphs.

Moreover, in the figure generating process in the conventional terminal units, since the filed image type figure data cannot ensure such applicability that the same type of figure may be generated by executing alteration or extension such as replacement of the elements in the figure with the other elements based on the figure in the other terminal units because the image of individual figure element is controlled by the application condition thereof in the figure and by the element name.

Moreover, since the graph or figure to be generated has been transferred to the other terminal units in the form of an image, amount of data to be transferred increases and it cannot be used easily in the network system coupling the terminal units with a public line network.

In addition, when it attempted to use the display screen such as graph or figure generated by the other terminal units at the own terminal unit, it has been unefficient when the public line network is used because frequent exchange of conversation messages and transfer of many kinds of display screen must be done between the own terminal unit which requests transfer of screen and the other terminal units which generate and transfer the display screen.

[DISCLOSURE OF THE INVENTION]

It is therefore an object of the present invention to easily utilize documents such as graphs and figures, etc. generated by the terminal units in the network system between the terminal units.

A method of generating graph and figure in the terminal units of the present invention analyzes a kind of graph such as graph of polygonal lines and circular graph, a kine of line of graph, attribute of graph such as color, generating condition of figure and figure element by considering these as the parts to generate part codes and generates a figure by combining part codes in such a manner as, for example, executing the program processing through combination of the codes of the figure generating elements and figure generating conditions.

For instance, when generation of graph is considered, classification such as graph of polygonal lines and bar graph is conducted based on the highest concept of generation of graph, and such classification is continued for minor items such as color and shape of bar graph next to the concept of the bar graph. Moreover, the generating condition may also be decomposed to have flexibility from the point of view of analysis such as linking the designated coordinate positions with a solid line.

The present invention generates the codes of such decomposed structural elements and generating condition as the part and registers such codes and combines such part codes indicating the processing function of the generating condition with the part codes of the structural elements and thereby gives the function as the commands in the program to generate the documents such as graphs and figures with combination of part codes and numerical data.

The document generated as explained above includes less amount of data because it is generated through combination of part codes and such data may be easily extracted and used in the distant other terminal units. Moreover, since the document is generated based on the program through combination of the part codes, such document may flexibly edited and revised through alteration of part codes in regard to structural elements and generating conditions.

Moreover, in introduction of codes by hierarchical subdivision, the document may be used only between the codes coupled with a tree structure, but it may be used also between the part codes of the higher level concept in the present invention.

For example, as the part codes, the part codes developed in generation of graph may also be used for figure generating processing by applying the generating condition in the figure generation.

The present invention enhances applicability of the document such as graph or figure generated by each terminal unit as the distributed data base in the network system.

In the CAD system, it has also been employed that the block diagram of logic circuit has been encoded and the figure has been generated conforming to the figure generating conditions. However, the prior art sets the generated data and forms a figure using such data only within the range of a particular program. Therefore, such prior art is different from the present invention in which the generating condition is combined with the part codes for generating commands of program in order to use for general purposes.

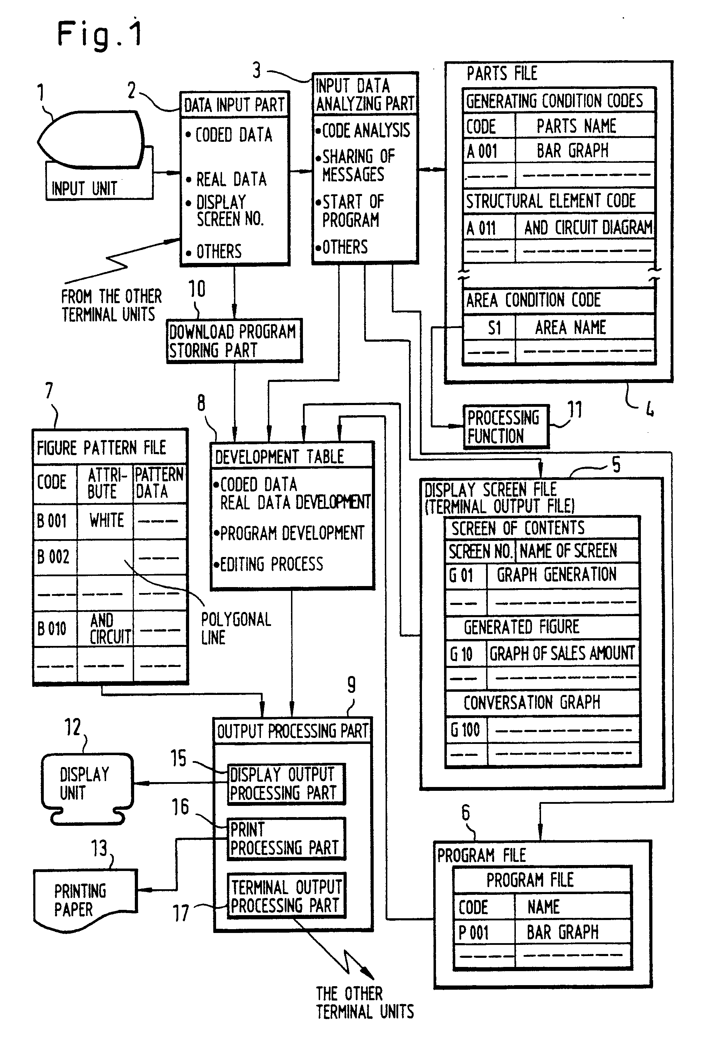

The objects and structure of the present invention explained above and the effect based thereon will be well understood from the following explanation made with reference to the drawings from Fig. 1 to Fig. 20.

[BRIEF DESCRIPTION OF THE DRAWINGS]

Fig. 1 is a basic structural diagram of the present invention.

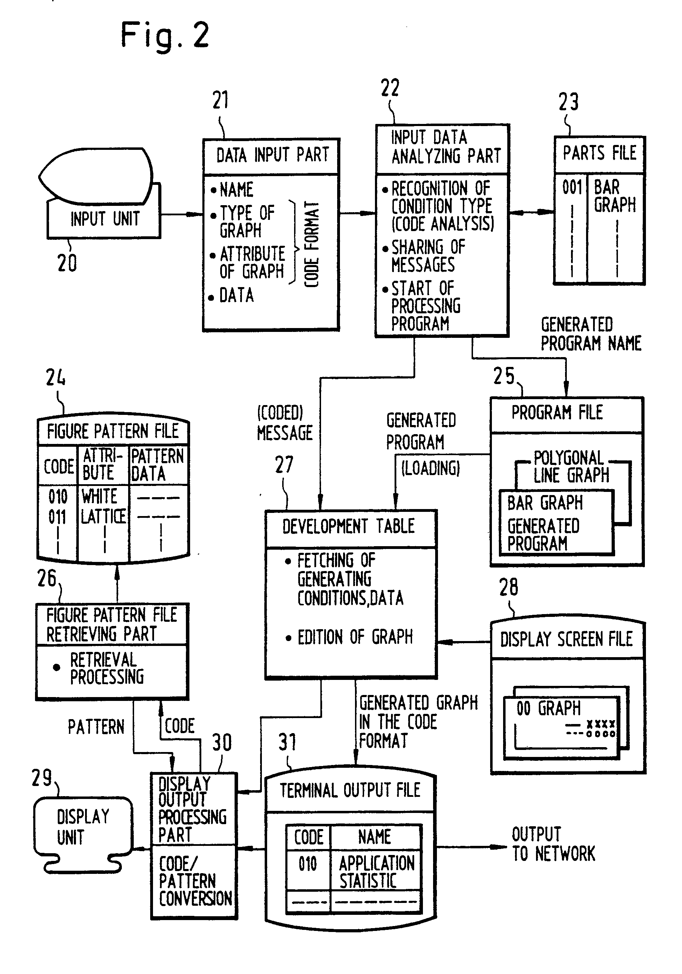

Fig. 2 is a diagram indicating a graph generating method in the network system of the present invention.

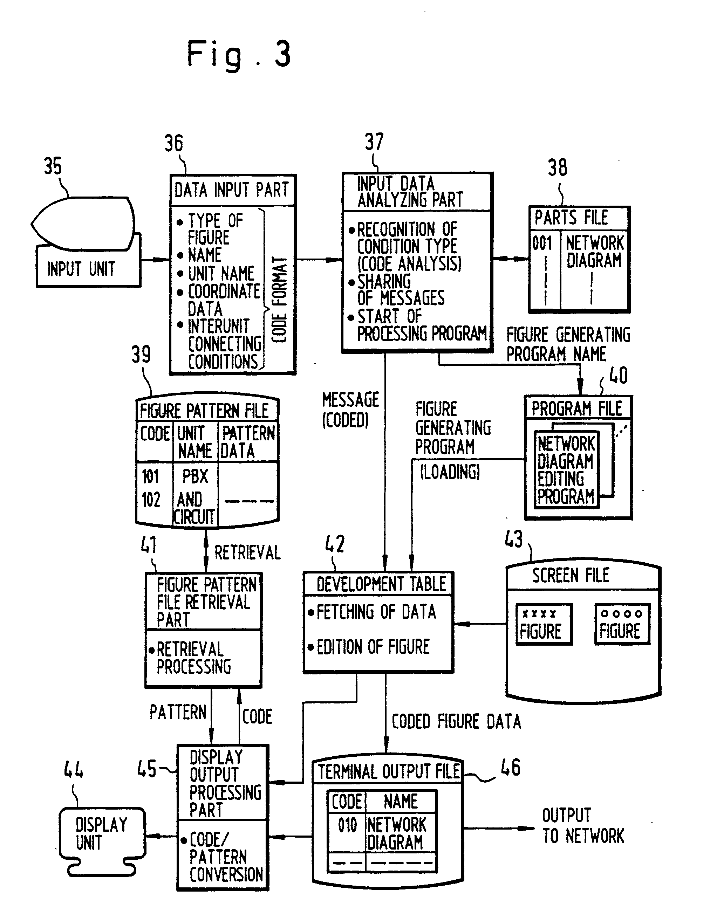

Fig. 3 is a diagram indicating a figure generating method in the network system of the present invention.

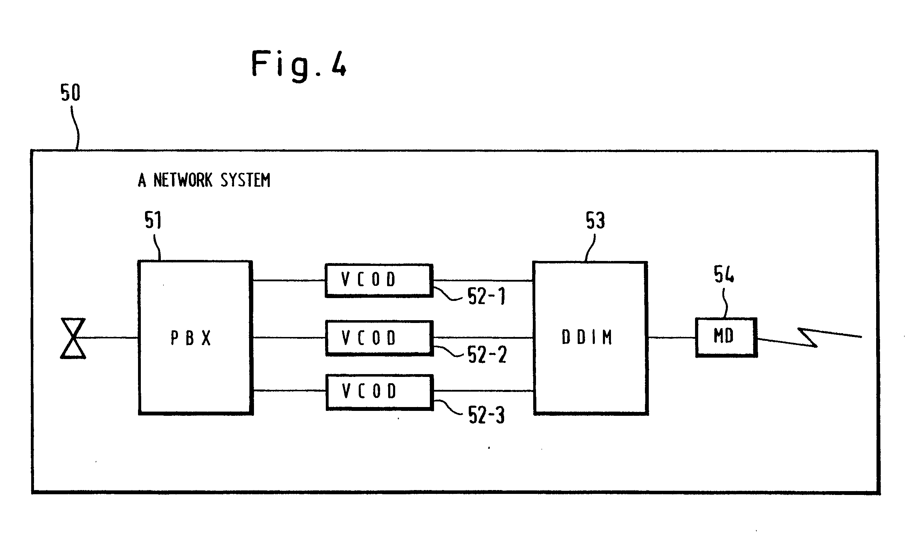

Fig. 4 is a diagram for indicating an embodiment of the figure generated.

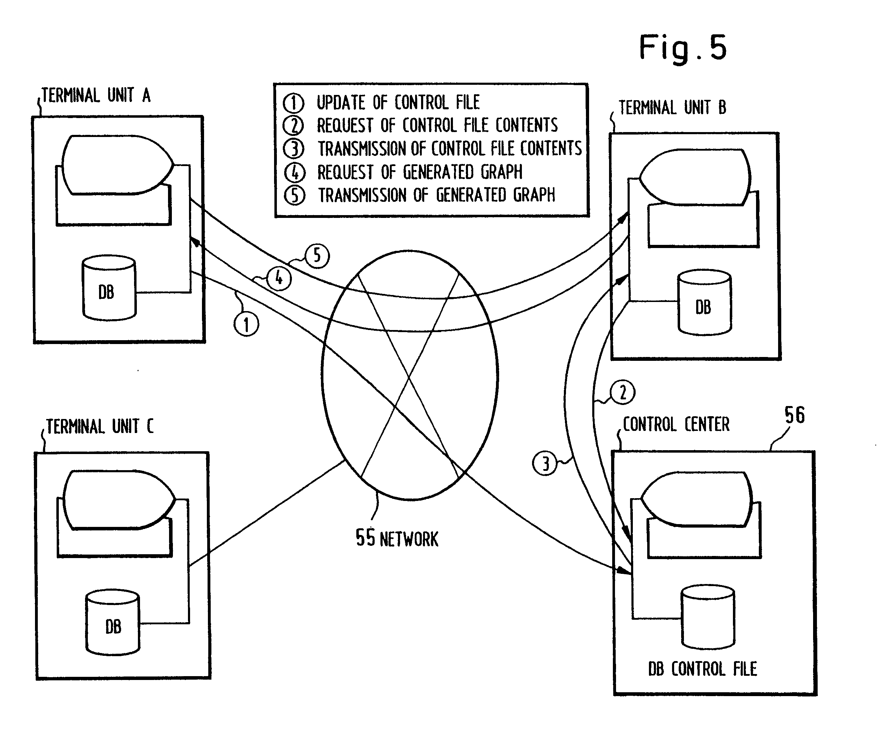

Fig. 5 is a diagram for indicating the network system of the present invention.

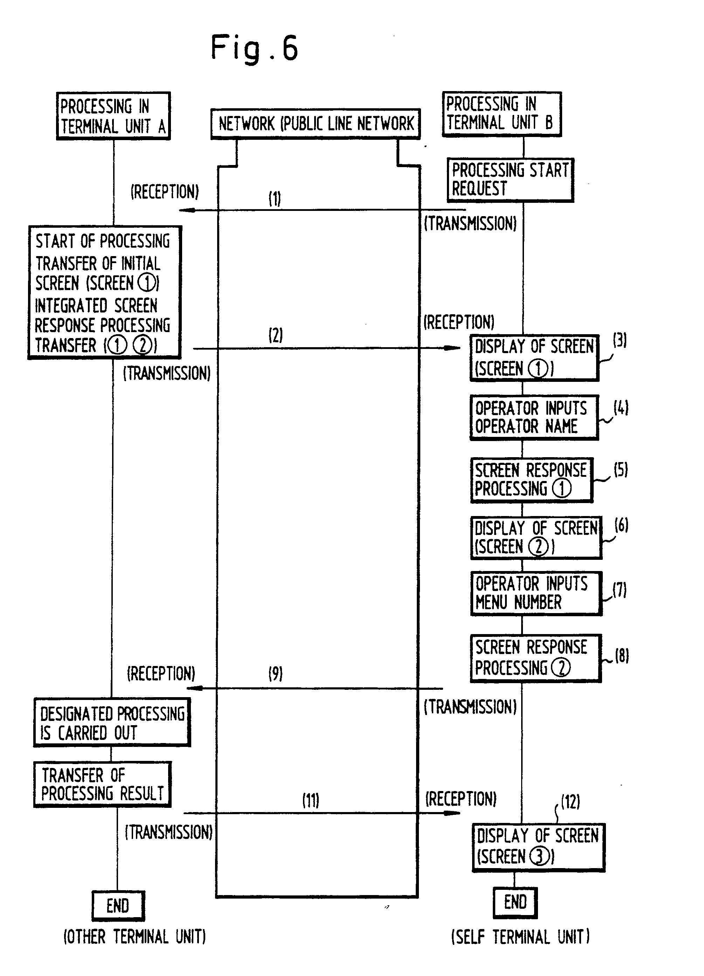

Fig. 6 is a flowchart of display screen transfer processing in the network system of the present invention.

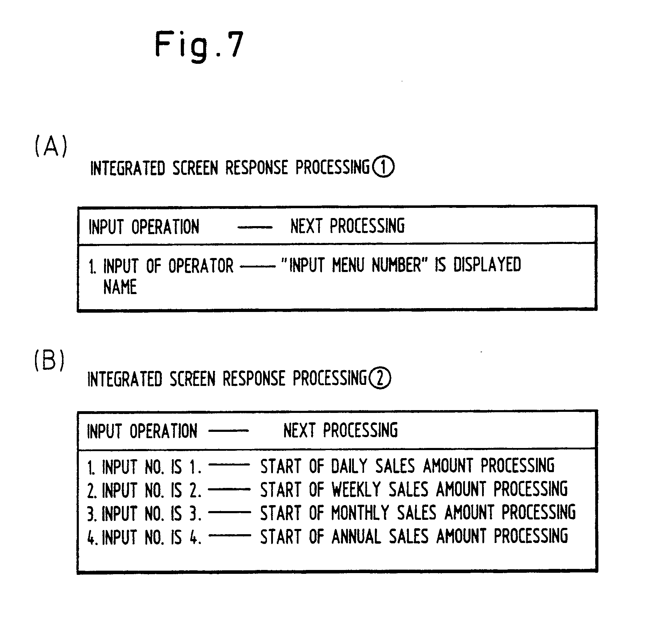

Fig. 7 is a diagram for indicating an embodiment of display screen response processing in the network of the present invention.

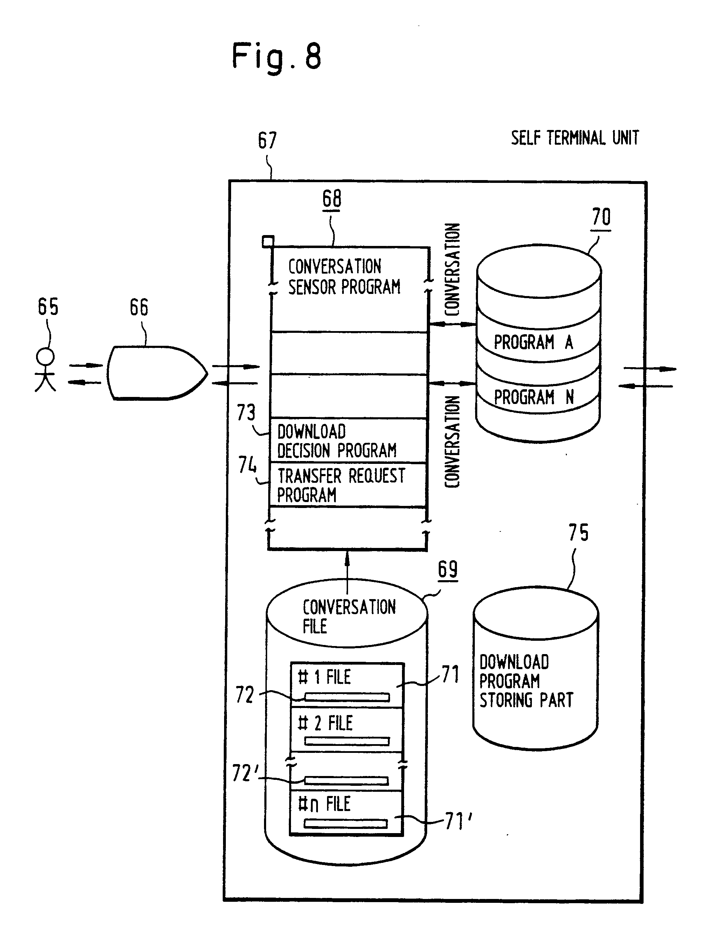

Fig. 8 is a diagram for explaining a program download method in the network system of the present invention.

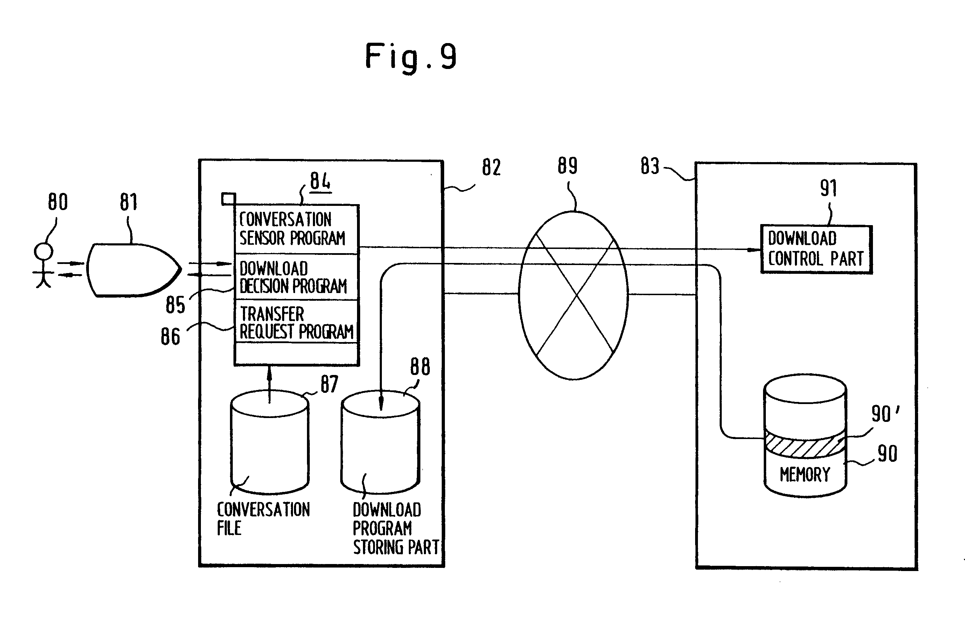

Fig. 9 is a diagram for indicating a program download method in the network system of the present inventin.

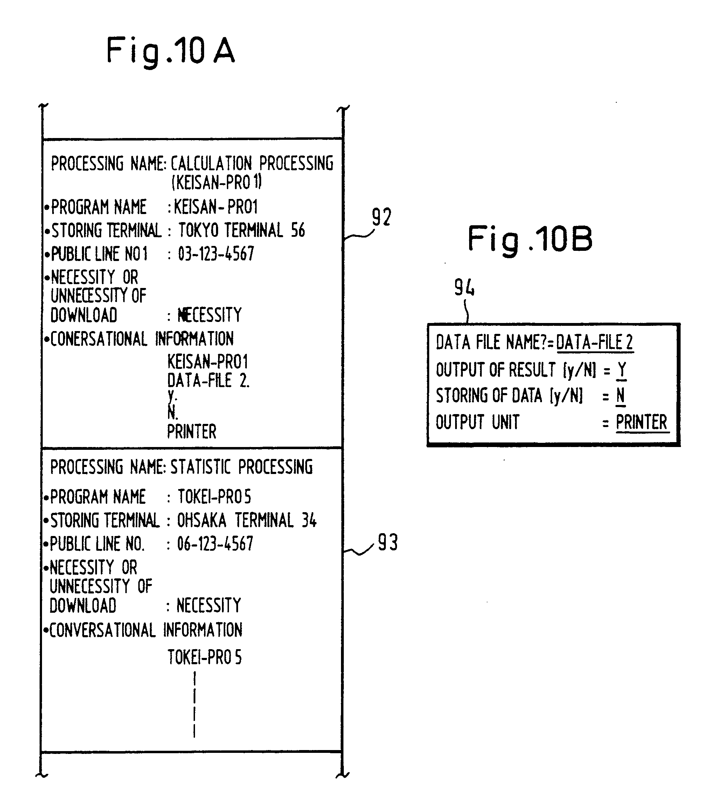

Fig. 10A is a digram for indicating an embodiment of conversation file in program download method.

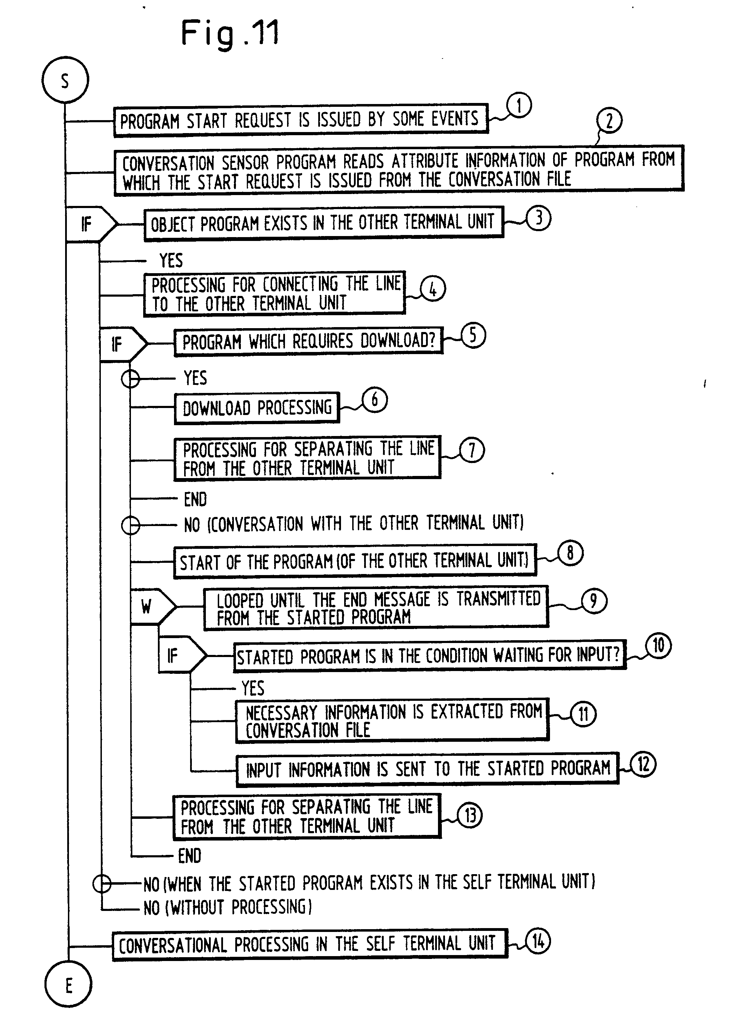

Fig. 11 is a diagram for indicating an embodiment flowchart of program download.

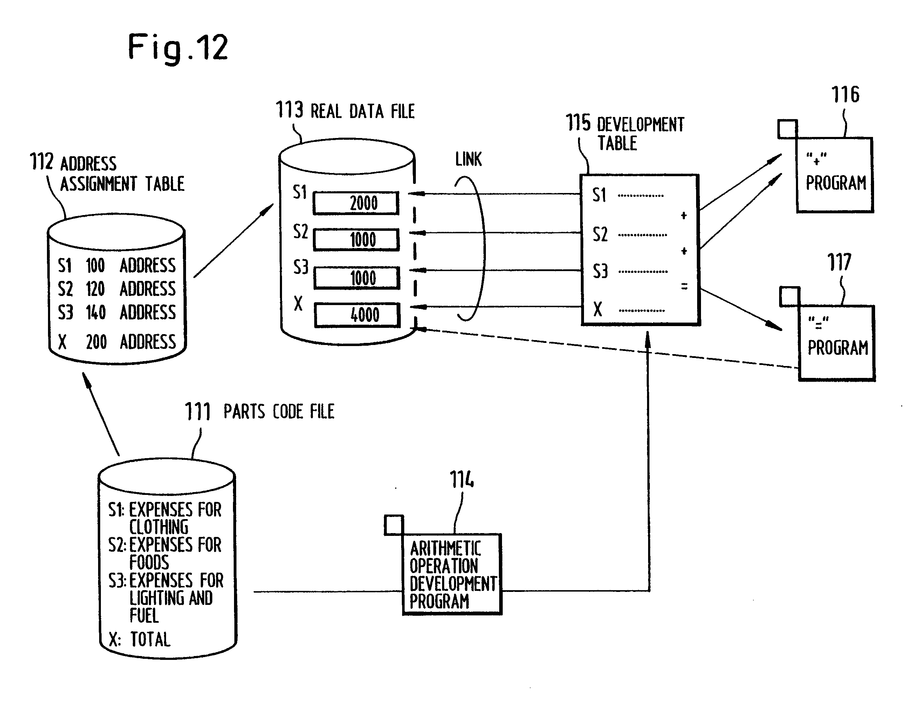

Fig. 12 is a diagram for indicating an embodiment of the area control method in the network system of the present invention.

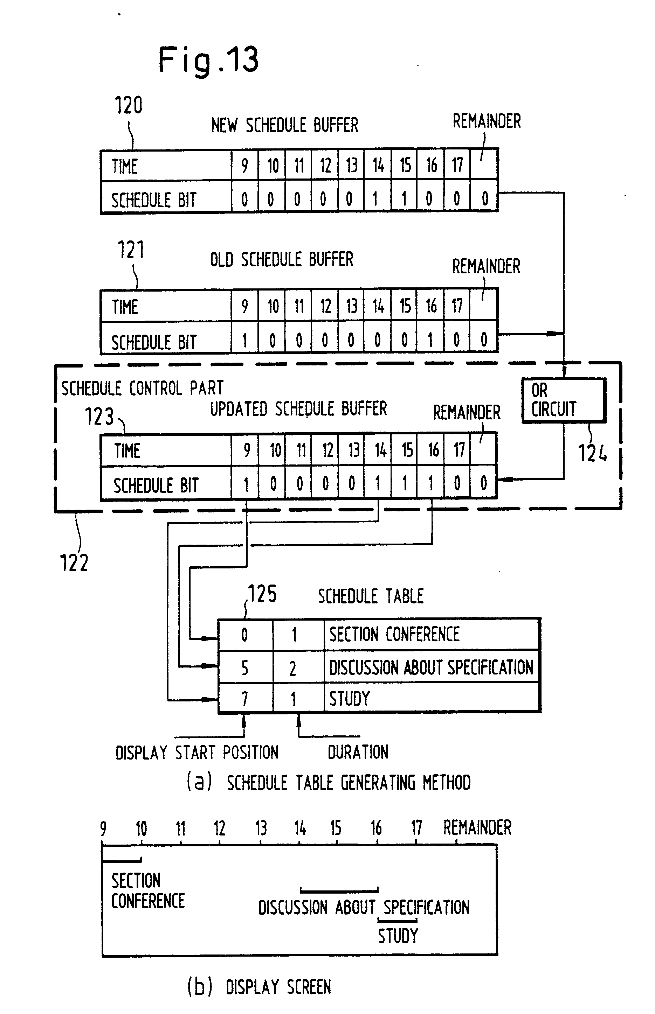

Fig. 13 is a diagram for indicating a schedule control graph generating method in the network system of the present inventin.

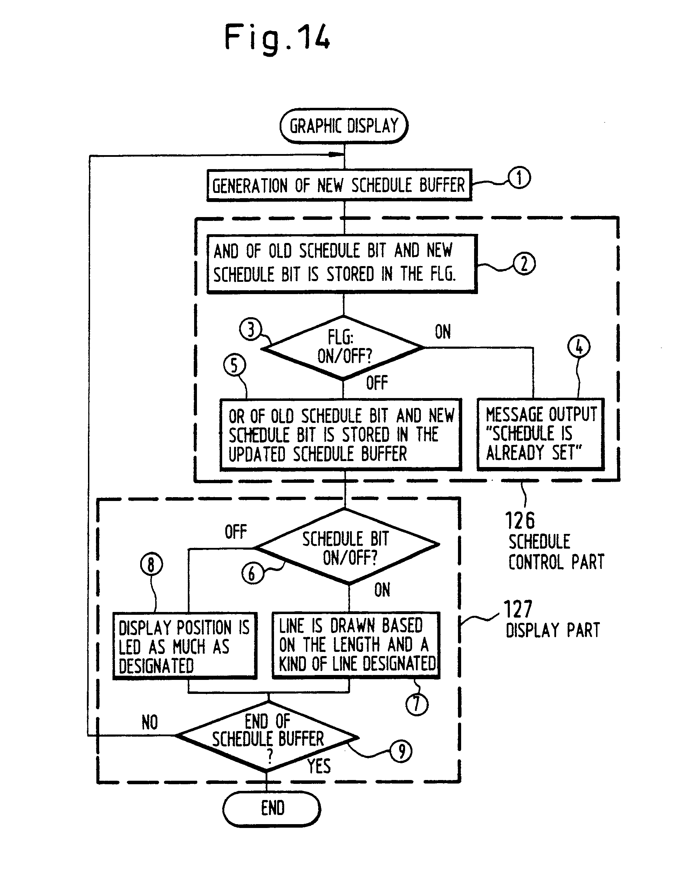

Fig. 14 is a diagram for indicating an embodiment flowchart (1) of a schedule control graph generating method.

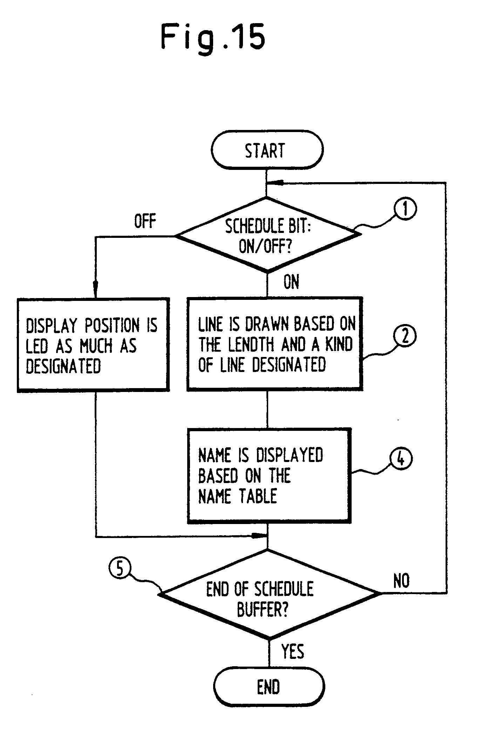

Fig. 15 is a diagram for indicating an embodiment flowchart of a schedule control graph generating method.

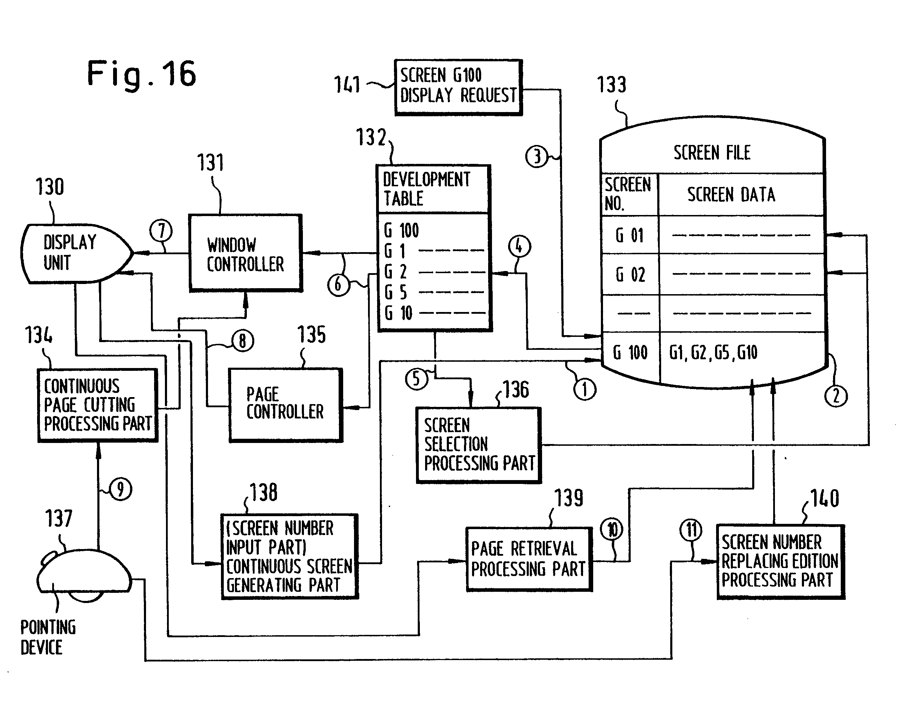

Fig. 16 is a diagram for indicating a screen display method in the network system of the present invention.

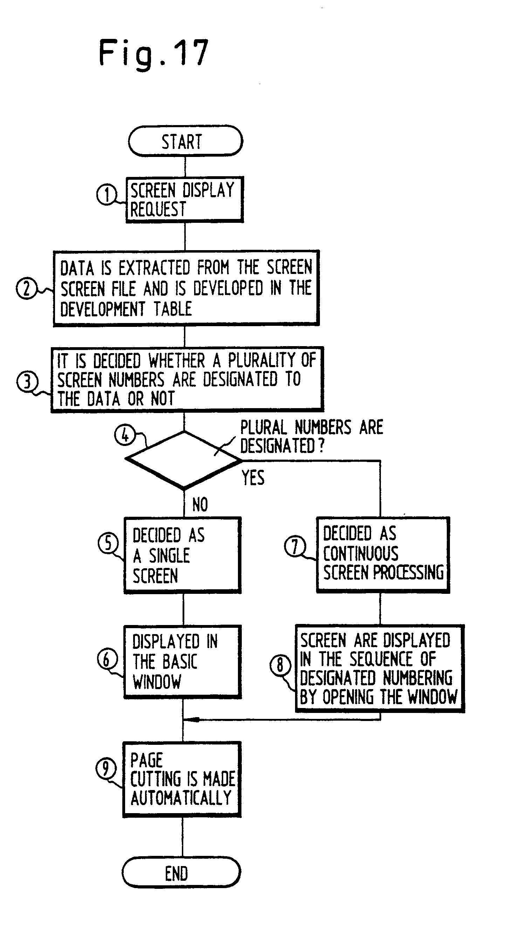

Fig. 17 is a digram for indicating a flowchart of page control in the screen display method of the present invention.

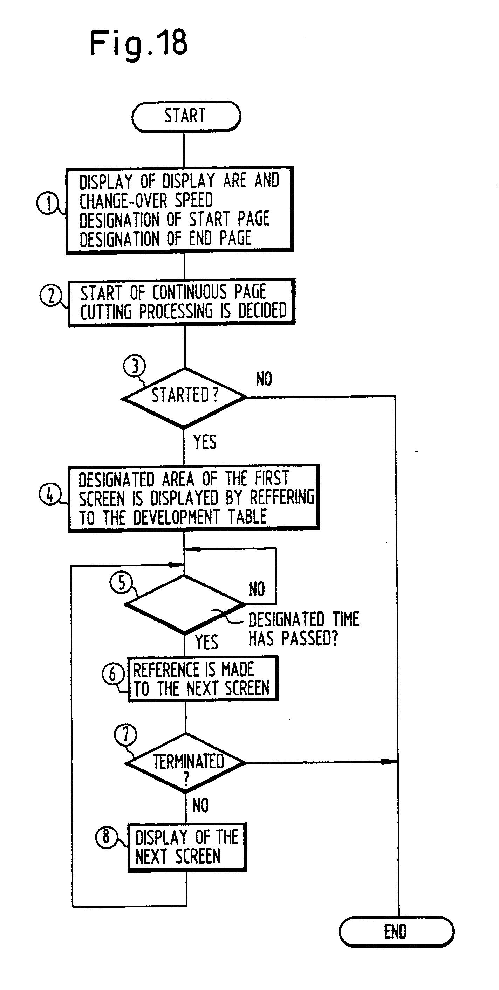

Fig. 18 is a diagram for indicating a flowchart of continuous page feeding in the screen display method of the present invention.

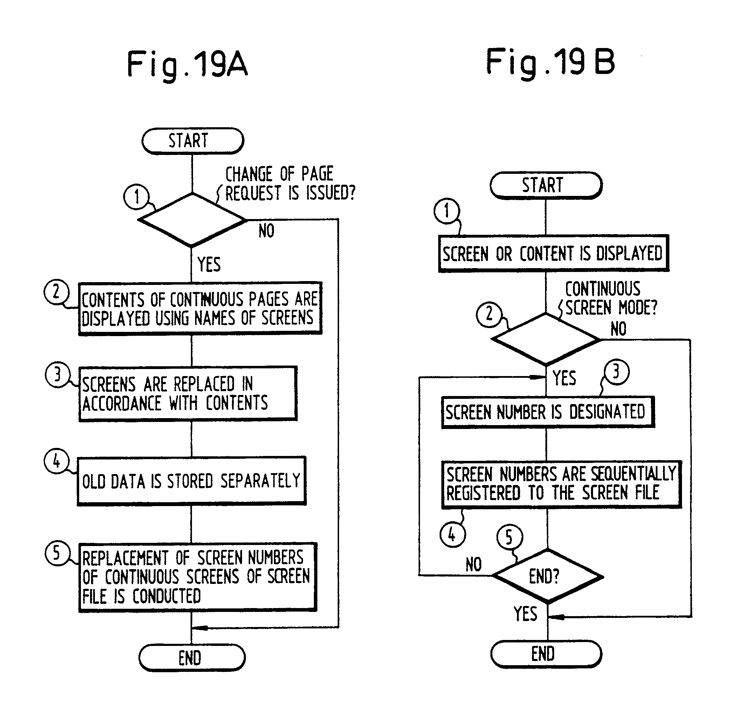

Fig. 19A is a diagram for indicating a flowchart of page control in the screen display method of the present invention.

Fig. 19B is a diagram for indicating a flowchart of continuous display screen generating process in the screen display method of the present invention.

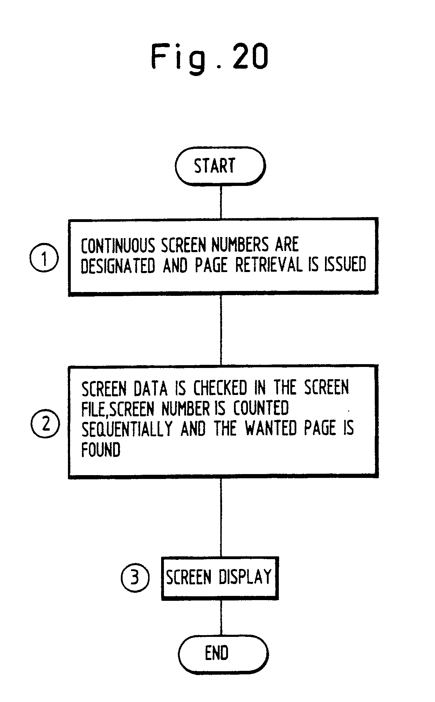

Fig. 20 is a diagram for indicating a flowchart of page retrieval in the screen display method of the present invention.

Fig. 21 is a diagram for indicating the graph generating method of the prior art.

Fig. 22 is a diagram for indicating the figure generating method of the prior art.

Fig. 23 is a diagram for indicating the displayed screen in the display screen data processing between terminal units of the prior art.

Fig. 24 is a diagram for indicating a display screen data processing method between terminal units of the prior art.

[PREFERRED EMBODIMENT OF THE PRESENT INVENTION]

The basic structure of the present invention will be explained with reference to Fig. 1.

In this figure, the reference numeral 1 denotes input unit 1 such as keyboard; 2, data input part for inputting the coded generating conditions such as coded program name and kind of graphs, etc.; 3, input data analyzing part for analayzing the codes of generating condition input, sharing messages for generation conditon input and object numerical data for graphic display and selecting program to be started.

Numeral 4 denotes part file for registering coded processing functions corresponding to generating condition such as "coupling designated coordiantes with a solid line", structure element such as "block digram of logic circuit" and processing areas; 5, display screen file, which may also be used as a terminal output file, for storing display screen of figure or various menu screens; 6, program file for storing various programs; 7, figure pattern file having figure pattern data such as coded figure elements.

Numeral 8 denotes development table for editing graphs and figures by developing the generating condition analyzed by the input data analyzing part 4 and selected program; 9, output processing part consisting of display output control part, print control part for providing print output to a printer, etc. and terminal output control part; 10, download program storing part for downloading program held in the other terminal unit in the network system to own terminal unit.

Numeral 12 denotes display; 13, slip for providing printed output; 15, display output processing part providing a function to execute figure display processing and window display processing in order to display figure data on the display by referring to the figure data file based on the data of graph and figure edited by the development table; 16, print processing part; 17, terminal output processing part for outputting coded data generated to the other terminal units connected in the network system.

Operations in the structure of Fig. 1 will be explained more practically with reference to the preferred embodiment of the Fig. 2 and subsequent figures.

Fig. 2 indicates a graph generating method in the network system of the present invention.

In Fig. 2, numeral 20 denotes input unit; 21, data input part for inputting graph generating data; 23, part table storing coded graph generating condition (bar graph, etc.); 24, figure pattern file having pattern data for screen display for each coded attribute of graph such as color and kind of line of graphs; 25, program file having a plurality of graph generating program prepared for each type of graph; 26, graph figure pattern file retrieval part for retrieving figure pattern file 24 with the data such as coded graph attribute requested from the display output processing part and extracting relevant pattern data; 27, development table; 28, screen file for storing screen format or generated graph in the form of file which is prepared for each type of graph and is common to graphs; 29, display unit; 30, display output processing part for executing display output processing of graph data; 31, terminal output file for filing the graph generating data such as graph generating conditon in the form of code and object numerical data for graphic display.

In Fig. 2, the elements denoted by the same naming as those in Fig. 1 have the same function as that in Fig. 1 and the terminal output file in Fig. 2 is included to the screen file 5 in Fig. 1

In the structure of Fig. 2, data input for geration of graphs is carried out by designating the position of cursor of the display position in the display screen of part codes or direct input of codes from the keyboard.

The data such as name, object value data for graphic indication is input in accordance with the designation displayed on the screen.

The coded graph generating condition includes type of graph such as polygonal line graph, circular graph and attribute of graph such as solid line, kind of line such as dotted line, and shading mode such as color, lattice and oblique lines.

Operations of a structure of embodiment shown in Fig. 2 will be explained hereunder.

The coded graph generating condition is input to the data input part 21 and the condition type thereof is recognized in the input data analyzing part 22 by making reference to the part table 23. The input data analyzing part 22 shares the messages of graph generating data such as graph generating condition, name and object value data for graphic indication to respective condition types.

In this case, the input data analyzing part 22 extracts the graph generating program corresponding to the type of graph to be generated from the program file 25 and then starts such program.

The development table 27 fetches various data shared by the input data analyzing part 22 and also fetches the format of graph seed required from the display screen file 28. The development table 27 edits the graph in the form of code in accordance with graph generating data.

The coded graph edited in the development table 27 is output to the display output processing part 30.

The display output processing part 30 sends the coded graph attribute data to the figure pattern file retrieving part 11, the figure pattern file retrieving pat 26 retrieves a figure pattern file 24, extracts graph attribute pattern data required for graphic display and sends this pattern data to the display output processing part 30. The display output processing part 30 displays the graph on the display unit 29 based on the pattern data.

Moreover, the graph generating data edited by the development table 27 is registered to to the display screen file 28 or to the terminal output file 31 in the form of code.

The terminal output file 25 outputs the generated graph to the other terminal units in accordance with the requests from the other terminal units.

The graph generation data registered in the display screen file 25 or terminal output file 31 forms a document data in the form of program command through combination of generating condition code and structural elements. Therefore, such graph generating data may be processed and modified easily by changing the codes of generating condition and structural elements.

Fig. 3 shows a figure generating system in the network of the present inventino.

In this figure, numeral 35 denotes input unit for inputting the figure generating conditions; 36, data input part for inputting coded type of figure; 37, input data analyzing part for analyzing input code and sharing messages; 38, part code file registering coded structural elements of network diagram; 39, figure pattern file storing, for example, pttern data of pattern of logic circuit block; 40, program file having a plurality of figure generating program prepared for each type of figure; 41, figure pattern file retrieving part for extracting pattern data of structural element of relevant figure by retrieving figure pattern file 39 with the coded structural element of figure requested from the display output processing part 45; 42, development table; 43, display screen file prepared for each type of figure to file data such as fomat which is common to the figures; 44, display unit for displaying generated figure. 45, display output processing part for displaying figure data output from the development table 42; 46, terminal output file for filing coded figure data generated in the development table 42.

In Fig. 3, the elements of the same name as those in Fig. 1 have the same function as those in Fig. 1. The terminal output file in Fig. 3 is included in the display screen file 5 in Fig. 1.

In the structure of Fig. 3, data input for generation of figure is carrie dout by designation of cursor position at the display position in the display screen of part code or direct input of the code from the keyboard. The practical examples of structural elements and generating conditions for generating figure are as follow.

The type of figure includes network diagram, shelf mounting diagram of printed circuit board, bay mounting diagram and the other figure generating condition includes name of figure, unit name, connecting condition between units, location of station, existence of backup line, name and pitch of printed circuit board, size of shelf and kind of shelf, etc.

Next, operations of the structure of embodiment shown in Fig. 3 will be explained.

The condition type of the coded structural elements and generating condition input to the data input part 36 is recognized in the input data analyzing part 37 by making reference to to the part code table 38 and the condition messsages are shared to the respective condition types.

In this case, the input data analyzing part 37 extracts a figure generating program corresponding to type of figure to be generated afrom the program file 40 and then starts this program.

The development table 42 fetches various data input from the data input part 36 and also fetches the required figure specifications from the display screen file 43. Moreover, the development table 42 edits the coded figure data in accordance with the figure data such as the figure generating condition including unit name, connecting condition between units shared by teh irput data analyzing part 37 and coordinate data, etc.

Coded figure data edited in the development table 42 is output to the display output processing part 45.

The display output processing part 45 sends the codes of structural elements of the coded figure to the figure pattern file retrieving part 41 and this figure pattern file retrieving part 41 retrieves the figure pattern file 39, extracts pattern data of structural element of figure required for display of figure and then sends such pattern data to the display output processing part 45. The display output processing part 45 displays the generated figure on the display unit 44 based on the pattern data.

Moreover, the figure data edited by the development table 42 is registered in the form of code to the display screen file 43 or terminal output file 46.

The terminal output file 46 is connected to the network and outputs the generated figure to the other terminal units.

The graph generating data registered to the display screen file 43 or terminal output file 46 forms the document data in the form of program commands through coupling of the generating condition codeds and structural elements. Therefore, such graph generation data may be processed easily by changing the codes of generating conditions and structural elements in the other terminal units.

Fig. 4 shows an embodiment of the generated figure which has been generated under the following conditions.

Type of figure:
Network diagram
Name:
A network system
Unit, coordinates:
PBX (10-2)
VCOD x 3, (15-4, 15-6, 15-8)
DDIM, (20-2)
MD, (25-6)

Connection between units:
Usual (connected with a solid line from the center of side surface of each unit)

Here, reference numeral 51(PBX) denotes exchange (switching system); 52-1 52-3(VCOD), voice coder; 53 (DDIM), digital data control unit; 54(MD), modem.

In this figure, the network diagram as the type of figure and PBX, VCOD, DDIM, MD as the units are input in the form of codes registered in the parts file and are developed on the development table 42. The generated display screen data of network diagram is fetched to the development table by the codes corresponding to the network diagram from the display screen file 43. Moreover, the numerical data which indicates the coordinate position on the display screen of each unit (for example, the start coordinate position 10-2 of figure pattern, in the case of PBX) is developed on the development table 42. In the same way, the figure generating program is fetched from the program file 40 and the figure generating data is formed through coupling of incorporated codes and numerical data to form a figure as indicated in the figure on the development table.

The figure pattern file retrieving part 41 retrieves the figure pattern file 39 based on the generating data, extracts pattern data of PBX parts in the form of codes and the display output processing part 45 displays the PBX pattern to the designated input position (10-2) in the registered pattern, for example, for PBX on the basis of the edited data. The figure elements (PBX, VCOD, etc.) are connected with a solid line in accordance with the definition "connected with a solid line from the center of the side surface of units" which is previously defined as "usual" under the generating condition input and thereby the network diagram as indicated in the figure is displayed on the screen.

Fig. 5 is a structural diagram of the network system to which the present invention is applied.

As shown in the figure, the network system of the present invention provides a control center 56 and employs a structure that a plurality of terminal units A, B, C,.... are connected in the network 55.

As an example, it is explained that the graph generated by the method of the present invention is used from the other terminal units connected in the network 55.

① The terminal unit A which has generated a graph updatas a data base control file in the control center 21.

② The other terminal unit B requests the contents of control file updated by the control center 56.

③ The control center 56 sends the contents of control file to the terminal unit B.

④ Upon confirming the contents, the terminal unit B requests transmission of the graph to the terminal unit A.

⑤ The terminal unit A sends the graph generating data. The terminal unit B having received the graph generating data outputs the graph as the pattern of coded graph generating data. Moreover, when required, the terminal unit B replaces a part of conditions and executes the processing for addition of graph, etc.

In the network system of the present invention, the document such as figure and program is coded for flexible use in the network system. Therefore, it is possible to easily fetch the generated figures and programs in the other terminal units to the self terminal unit for use.

The display screen transfer processing method in the network system of the presaent invention will then be explained with reference to Fig. 6 and Fig. 7.

Fig. 6 is a flowchart of the display screen transfer processing in the network system of the present invention and Fig. 7 indicates an embodiment of the display screen response processing of the transferred display screen.

The processing similar to that shown in Fig. 23 in the conventional display screen transfer method explained in the [BACKGROUND OF THE INVENTION] will be explained as an example.

Explanation will be made in accordance with the flowchart of Fig. 6. Reference will be made also to Fig. 7 and Fig. 23 as required.

(1) The self terminal unit (terminal unit B) issues the start request to the other terminal unit (terminal unit A), for example, for sales amount processing.

(2) Upon reception of the start request from the terminal unit B, the terminal unit A starts the sales amount processing program and sends the initial display screen (display screen 1 in Fig. 23, hereinafter display screen 1 , display screen 2 and display screen 3 correspond to those in Fig. 23). Simultaneously, the terminal unit A also transfers the integrated display screen response processing 1 and integrated display screen response processing 2 shown in Figs. 7(A) and (B) to the terminal unit B.

In the display screen response processing 1 , when an operator name is input corresponding to the designation in the display screen 1 in Fig. 23, the conversation message "Input menu number" is displayed.

In the display screen response processing 2 , the input number is designated for executing the processing corresponding to the input number displayed on the display screen 2 .

The processings of the number (3) (8) are executed in the terminal unit B.

(3) The display screen 1 is displayed.

(4) An operator inputs operator name.

(5) The processing of display screen response processing 1 is executed.

(6) As a result of processing of the display screen response processing 1 , the display screen 2 is displayed.

(7) An operator inputs the menu number in accordance with the message displayed on the display screen. For example, "1" is input for executing the sales amount processing.

(8) The display screen response processing 2 is executed.

(9) The menu number "1" is transmitted to the terminal unit B.

(10) The terminal unit A executes the "daily sales amount" processing in accordance with the menu number transmitted.

(11) The processing result is transmitted to the terminal unit B.

(12) The processing result indicated in the display screen 3 , as an example, is displayed in the terminal unit B.

In the prior art, the mutual conversation messages have been exchanged and conversation screens have also be transferred for each conversation between the terminal unit A and terminal unit B of (3) (8). But in the present invention, the display screen response processing program has been transferred by the program transfer function. Therefore, the number of times of communications between the terminal units may be reduced.

The program download method in the network system in the present invention will be explained with reference to Fig. 7 to Fig. 11.

In the network system of the present invention, it is possible that the program of the other terminal unit is read in the self terminal unit (program download) and is executed in the self terminal unit.

Fig. 8 is a diagram for explaining the program download method in the network system of the present invention.

In this figure, numeral 65 denotes operator; 66, display unit; 67, self terminal unit; 68, conversation sensor program for realizing a series of procedures including decision of program to be started and setting of parameters between the operator and self terminal unit in the form of conversation and for realizing access to the other terminal units; 69, conversation file for storing conversation information and attribute information; 70, program file; 71, 71', files in the conversation file for describing conversation information and attribute information required for making conversation with an operator 65 to each processing file; 72, 72', download describing columns for description of "necessity" to realize program download in the self terminal unit 67 and execute the processing of file name (program name) thereof or "unnecessity" to realize execution in the other terminal unit.

73, download decision program for deciding "necessity" or "unnecessity" described in the download describing columns 72, 72'; 74, transfer request program for requesting transfer of the processing program to execute the processing of file name in the self terminal unit when "necessity" is described in the downlowd describing column 72; 75, download program storing part for storing the processing program sent from the other terminal units by the execution of such transfer request program.

The program download method in the network system of the present invention will be explained with reference to Fig. 9.

In this figure, 80, operator; 81, display; 82, self terminal unit; 83, other terminal unit; 84, conversation sensor program; 85, download program; 86, transfer request program; 87, conversation file; 88, download program storing part; 89, public line network; 90, memory in the terminal unit 83; 90', program stored in the memory 90; 91, download control part for reading the requested program 90' from the memory 91 and transfers the program to the other terminal unit (the self terminal unit 82, in this case) when the other temrinal unit (the self terminal unit 82, in this case) requests transfer of program.

Operations in Fig. 9 will be explained later with reference to Fig. 11.

Fig. 10A is an embodiment of the conversation file. The files 92, 93 are provided with the column for describing necessity or unnecessity of program download as the attribute information. When the processing is requested after transfer to the self terminal unit, "necessity" is described in this column and when the program download is impossible and processing is executed in the terminal unit comprising the processing program, "unnecessity" is described. Description of "necessity" and "unnecessity" is previously decided at the stage of design, based on the experience considering necessity of conversaton with the other system.

Fig. 10B indicates an embodiment of the screen display in the converdation processing of program download.

In this embodiment, the conversation information for the file 92 "calculation processing 1" is displayed on the display unit.

As shown in the figure, input of file name and input of result output are conducted in the form of conversation on the display screen for data file name, result output, data storing and output unit as shown in the figure.

In case a program is to be executed, since "necessity" is described in the download describing column, the self terminal unit recognizes the terminal unit storing such program and the public line network and issues the program transfer request to such terminal unit.

Fig. 11 is a flowchart of an embodiment of program download of the present invention.

The flowchart of this figure will be explained in the sequence of the numbering in the circles as an example of the processing program "calculation processing 1" shwon in Fig. 10A and Fig. 10B. Reference to Fig. 9 will also be made as required.

① With designation by an operator 80, the start of the program "calculation processing 1" (program name: "keisan-prol") is requested.

② The conversation sensor program 84 reads the attribute information of program requested to start from the conversation file 87.

③ Based on the attribute information of program read from the conversation file 87, it is checked whether the program exists in the other terminal unit or not.

④ Since the program name "keisan-prol" is stored in the "Tokyo terminal 56" (the other terminal unit 83), the conversation sensor program 84 starts the line program to extend the connection to "Tokyo terminal 56" (other terminal unit 83) through the public line network 89.

⑤ The download describing column for attribute information of the file read using the download decision program 85 is searched.

⑥ When "necessity" is described in the download describing column by the decision of 5 , the transfer request program is started to request download of the program "keisan-prol" as the object of the download control part 91.

Meanwhile, the other terminal unit 83 ("Tokyo terminal 56") calls the program name "keisan-prol" stored in the memory 90 and transfers it to the self terminal unit 82 through the public line network.

⑦ When download is terminated, the other terminal unit is separated from the line.

On the other hand, in the self terminal unit 82 having conducted program download, the conversation sensor program 84 instructs execution of the downloaded program "keisan-prol" stored in the download program storing part 88. Thereby, the "keisan-prol" is read from the download program storing part 88 and this program is executed.

⑧ When "unnecessity" is written in the download describing column in the step 5, the conversation sensor program 84 causes the other terminal unit 83 to start the program name "keisan-prol".

⑨ The other terminal unit 83 is in the waiting condition until the end of started program is received.

⑩ It is decided whether the started program "keisan-prol" in the condition to wait for input of information data.

⑪ The self terminal unit 82 extracts the necessary information from the conversation file 87 or obtains the necessary information by making inquiry to the operator 80.

⑫ The obtained information is transmitted to the other terminal unit 83.

⑬ The the processing of "keisan-prol" in the other terminal unit 83 is terminated and is sent to the self terminal unit 82, the selt terminal unit 82 separates the line connected to the other terminal unit 83.

⑭ When it is decided that the program "keisan-prol" is in the self terminal unit in the step 3 , the conversation sensor program 84 executes the program in the self terminal unit 82.

The file "calculation processing 1" (program name: "keisan-prol") has been explained but the other files are also processed in the same way. Namely, it is decided whether the self terminal unit 82 executes the object program in the self terminal unit after download of program or the other terminal unit executes such object program, depending on "necessity" or "unnecessity" of download described previously in the download describing column of the file as the attribute information.

According to the download program method of the present invention, since the program, which requires frequent communication with the self terminal unit through the public line network during execution while it exists in the other terminal unit, is automatically downloaded to the self terminal unit, the line application efficiency of the network system can be improved.

In the present invention, since the display screen datra and program data in the display screen transfer processing method and program download method are formed by codes, duch data may be easily transferred or used between distant terminal units.

In the network system of the present invention, the area for storing data is defined when the data is generated and is coded. The defined area is used as the command and the coupling between the desired processing functions is designated by the parts code table and thereby the contents of area may be set, altered or added freely.

Fig. 12 is an embodiment of the area control method in the network system of the present invention.

In the terminal unit connected in the network system of the present invention, when data is generated, the area for storing data is defined, such defined area is used as the command, coupling between such command and desired processing function is designated by the parts file and such command is allowed to be used in the other processing function, thereby the processing contents for such area may be freely set, altered or added.

Fig. 12 is an embodiment in case the area control method explained above is applied to the arithmetic operation processing.

In this figure, numeral 111 denotes parts code file to which the area name of the area for storing data generated in accordance with the arithmetic calculation formula to be processed and the command (code) for designating the processing function to be applied to such area are registered as the parts. In the same figure, S1, S2 and S3 indicate the area names of defined areas. For instance, such area names are formed as the commands (codes) indicating the addition processing program. X is has the processing function of "equal (=)" and is also used as the area name on the real data.

112 denotes address assignment table, indicating the real addresses of areas indicated by S1, S2, S3, X indicating commands and area names on the parts table.

113 denotes real data file for storing data such as numerical values; 114, arithmetic operation development program for calling a function program to be processed for the area (S1, S2, etc.) designated by the area name; 115, development table for developing area name (S1, S2, etc.), real data on the area designated by the area nameand information for calling the program to be applied to the area developed; 116, 117, arithmetic operation program listed as the example and called on the development table in accordance with instruction of the arithmetic operation development program developed on the devlopment table.

Operations of the structure shown in Fig. 12 will be explained. For instance, the area name "expenses for clothing" is registered to the defined area S1 on the parts code file, while "expenses for foods" to the area S2, "expenses for lighting and fuel" to the area S3 and "Total" to the area X. S1, S2, S3 correspond, for example, to the positon of table on the display screen in the table calculation processing.

The addresses of defined area are assingend by the address assignment table 112. Moreover, respective real data are stored in the defined areas S1, S2, S3 on the real data file.

The atithmetic operation development program develops, with the commands of S1, S2, S3, the real address on each domain and the information for calling the program to be processed. As a result, the "+" program defined in S1, S2, S3 is called, the arithmetic operations S1 + S2, (S1 + S2) + S3 are executed for the real data on the regions S1, S2, S3 in accordance with the commands (S1, S2, S3, X, etc.) and the result data is stored in the region X.

The other processing function is applied, when necessary, to the data in the domain X.

The function to be effectuated on the defined domains S1, S2, etc. may be applied not only to the elements of arithmetic operation processing program but also to the generation and display of display screen data, generation of fixed data of display screen, control (grouping) of data link in the form of table, graphic display of data and generation of figure of data and these functions may be realized by the corresponding processing programs.

The method of generating a schedule control graph in the network system of the present invention will then be explained with reference to Fig. 13 to Fig. 16.

Fig. 13, (a) indicates a schedule table generating method, while (b), display screen of the graphic display of generated schedule.

In Fig. 13(a), numeral 120 denotes a new schedule buffer allowing entry of schedule bit 1 to the scheduled time and schedule bit 0 to the not scheduled time to store the newly generated schedules; 121, old schedule buffer storing already determined schedule data.

122, schedule control part for controlling the schedules based on the new schedule buffer 120 and old schedule buffer 121; 123, updated schedule buffer for obtaining OR of the new schedule buffer 120 and old schedule buffer 121; 124, OR circuit for obtaining OR of the new schedule buffer 120 and old schedule buffer 121.

125, schedule table setting the start position and duration (length) of the graphic display for indicating the schedules with a graph based on the schedule bits of the updated schedule buffer 123 and also providing the names of schedules.

In the example shown in the figure, the time of the display start position 0 is set to 9 o'clock.

In the case of generating the schedules for 24 hours in unit of hour like an example shown in the figure, it is enough that the buffer is given the size of 24 bits, however, in the case of generating the schedules in unit of 10 minutes, 18 bytes, which is equal to 6 times of 24 bits, are necessary.

Fig. 13 (b) indicates a display screen of the schedule control graph generated on the basis of the schedule table 125.

The time corresponding to the display start positon 0 is set to 9 o'clock and display start position, duration of schedule table and names of schedules are displayed as the graph.

Fig. 14 shows flowchart (1) of the schedule control graph generating method in the network system of the present invention.

In this figure, 126 denotes flow in the schedule control part, while 127, flowchart in the display part for showing the updated schedule in the form of graph and displaying such graph.

Explanation will be made in accordance with the numbering in the circles.

① A new schedule buffer is generated on the basis of the newly generated schedules.

② Logical OR of the schedule buts of old schedule buffer and new schedule buffer is stored in the flag (FLG).

③ It is decided whether the flag (FLG) is ON or OFF.

④ Flag ON means that the schedule bits of new schedule buffer and old schedule buffer are "1", namely the schedule is newly set in the time period where the schedule is already set in the old buffer. Therefore the message "schedule is already set" is output.

⑤ When flag (FLG) is 0, logical OR of the schedule bits of the new schedule buffer and old schedule buffer is taken and the result is stored in the updated schedule buffer.

⑥ ON/OFF of schedule bits of the updated schedule buffer is decided.

⑦ When FLG is ON, a line is drawn based on the size and kind of line designated.

⑧ When FLG is OFF, the display position is led as much as the length designated.

⑨ Such processing is executed for each schedule of the time period and when processing is executed to all time periods, the processing terminates.

Fig. 15 indicates flow (2) as the embodiment of the display part in the schedule control graph generating method. Only the flow of display part is indicated and the flow in the schedule control part is the same as Fig. 14.

Explanation of the flow will be made in the sequence of the numbering in the circles.

① ON/OFF of schedule bits of updated schedule buffer is decided.

② When the schedule bit is ON, a line is drawn based on the period and kind of line designated.

③ When schedule bit is OFF, the display positon is led as much as the period designated.

④ Name is described based on the name table.

⑤ This processing is carried out for the schedule bits of each time period. When this processing is made for all time periods, the processing terminates.

In the flow explained above, the schedule table 125 shown in Fig. 13 displays a graph by extacting only the name but it is also possible to obtain the graph using the graph generating method shown in Fig. 2 based on the display start position, duration and name stored in the schedule table 125.

The terminal units in the network system of the present invention form a single display screen as the gathering of coded parts data and easily fetch the data of the other display screens.

Therefore, the window control for introducing the screen number into the display data of display screen file can be realized easily and the continuous screen processing in the multi-window can also be realized easily by fetching a plurality of display screens.

The screen display method in the network system of the present invention is shown in Fig. 16.

In Fig. 16, 130 denotes display unit; 131, window controller; 132, development table; 133, display screen file for controlling generated figures and generated graphs in accordance with the numbering of registeration; 134, continuous page processing part; 135, page controller; 136, display screen selecting process; 137. pointing device such as mouth; 138, continuous display screen generation procesing part; 139, page retrieval processing part; 140, the display screen number replacing edition processing part; 141, screen display request from operator.

operations of structure shown in the figure are explained in accordance with the numbering in the circles.

① The screen number is input on the designated display screen file by designating the contents displayed on the display unit 130 or designating displayed screen. When designation is made in plural numbers, the screen numbers are input in the input sequence.

For example, in the case of the example shown in the figure, the window display screens G1, G2, G5, G10 may be desiganted for the screen number G100.

② The display screen number may also be designated on the screen file from the external terminal units.

③ The display request 141 is generated for the display screen number G100.

④ The screen data of the designated display screen number G100 is developed on the development table.

⑤ Since the display screen nubmers G1, G2, G5, G10 exist in the developed display screen nubmer G100, the relevant display screen data is extracted by referring again to the display screen file and is then developed on the development table.

⑥ The display screen data is sent to the window controller 131 and page controller.

⑦ The data which is not the display screen number is decided as the data of the one screen of the one gathering and display is carried out by opening the window for each display screen number. In this case, the window display is carried out so that the youngest number designating the first display is displayed at the upper most position.

⑧ The pages are assigned sequentially and displayed. In this case, the history is stored for the pages in different versions due to the updataing, the page control is made with the suffix, the pages with new versions are displayed in the upper positions and the pages with old versions are displayed in the latter positions.

⑨ The display area may be designated for the displayed continuous screens and the page cutting may be conducted continuously with the display start page and display end page. In this case, the display switching time can also be designated.

⑩ When page retrieval is requested, the display screen data in the screen file is extracted considering the numbering. In this case, the number of versions is also considered.

⑪ The sequence of continuous screens once generated may be changed. In the case of the example shown in the figure, designation is made in the sequence of G1, G2, G5, G10 but it is also possible to designate the display sequence of G2, G1, G5, G10 by replacing G1 and G2.

Fig. 17 shows a flow of page control in the screen display method of the present invention.

The flow will be explained in the sequence of numbering in the circles.

① Screen display request is generated.

② Data is extracted from the display screen file and it is developed on the development table.

③ , ④ whether plural screen numbers are designated to the data or not is decided.

⑤ When it is not decided that plural screen numbers are designated to the data in the step 4 , a single screen is decided to exist.

⑥ Screen is displayed in the basic window.

⑦ When it is decided that plural screen numbers are designated to the data, continuous screen processing is decided.

⑧ The continuous screens are displayed by opening the windows in the sequence of designated screen numbers.

⑨ Paging is carried out automatically.

Fig. 18 is a flow of continuous page cutting process in the screen display method of the present inventin.

The flow will be explained in the sequence of the numbering in the circles.

① Display area, exchanging speed, display start page and display end page are designated.

②, ③ It is decided whether the continuous page cutting process should be started or not.

④ Since the start of continuous page cutting process is decided in the step 3 , the designated area of first screen is displayed consulting with the development table.

⑤ It is decided whether the designated time has passed or not considering the exchanging speed.

⑥ Sinkce it is decided that the designated time has passed in the step 5 , the next screen is displayed.

⑦ It is decided whether all screens are displayed continuously or not.

⑧ If all screens are not yet displayed in the step 7, the processings of the step 5 and subsequent steps are repeated.

If the continuous processings are not started in the step 3 , the processing is terminated. When it is decided that all screens are displayed in the step 8 , the processing is terminated.

Fig. 19A shows a flow of page control in the screen display method of the present invention.

The flow will be explained in the sequence of numbering in the circles.

① It is decided whether page change request is issued or not. When page change request is not issued, processing terminates.

② When the page change request is issued, contents of continuous screens is displayed using the name of screens.

③ The screens are replaced in accordance with the contents.

④ Old data is stored separately.

⑤ The screen numbers of continuous screens of screen file are replaced.

Fig. 19B shows a flow of continuous display screen generating process in the screen display method of the present invention.

① Screen or content is displayed.

② It is decided whether the continuous screen mode or not.

③ Screen number is designated.

④ The display screen numbers are sequentially registered to the screen file.

⑤ It is decided whether designation has been made to all display screen numbers or not. When designation to all screen number is not yet completed, the processings of step 3 and subsequent steps are repeated. When this designation is completed, the processing terminates.

Fig. 20 shows a flow of page retrieval in the screen display method of the present invention.

① Designation is made to continuous display screen numbers and the page retrieval request to such pages is issued.

② The screens are counted sequentially in accordance with the page numbering on the display screen in the screen file to find out the desired page.

③ The screen of desired page is displayed.

[APPLICABILITY IN INDUSTRY]

As explained above, the present invention prepares the coded structural elements and generating conditions of documents to be generated as the independent parts and forms a document by giving the function like commands of organic programs to each independent part through combination of parts. Thereby the present invention easily and flexibly processes and alters the generated documents by changing the parts codes used in the document generation.

Moreover, since the document data is formed with the code format, amount of data can be decreased and data may also be used even in the distant other terminal units through the transfer of data.

Accordingly, the present invention remarkably enhances applicability of network system by registering the documents generated in each terminal unit to the file of termnal unit as the distributed data base and then utilizing such documents in the other terminal units.

## Claims

1. In a network system consisting of terminal units providing a function to generate documents such as graphs and figures in the display screen, said network system consists of terminal units providing the function to generate a document through combination of structral element coes and generating condition codes; wherein a terminal unit comprises a parts file (4) registering coded structural elements of document and document generating conditions, a program file (6) providing a plurality of programs for generating various kinds of documents and a development table (8) for developing coded generating conditions, structural elements and program, thereby a program for generating documents, structural element codes and generating condition codes on the parts file are developed on the development table (8).

2. A network system according to claim 1, wherein a terminal unit forms a distributed data system, the generated coded document is stored in a display screen file (5), a document is reproduced by the other terminal unit by extracting the coded document data and such reproduced data may be updated as required.

3. A network system according to claims 1 and 2, wherein

the parts table (4) comprises coded graph generating conditions such as attribute including type and colors of graphs;

the program file (6) comprises graph generating programs for various types of graphs;

the figure pattern file (7) comprises coded data for attributes of graphs;

the coded graph generating conditions and object numerical datga for graphic display are input;

a type of generated graph is recognized by referring to the parts file using the codes of graph generating condition input and the relevant graph generating program is started; and

the started graph generating program extracts the graph attribute data from the figure pattern file (7) based on the coded other generating conditions and executes the graph editing process for graphic display of the object data for display of edited graph data.

4. A network system according to claims 1 and 2, wherein;

the parts table (4) comprises the coded figure generating conditions and figure structural elements;

the program file (6) comprises a plurality of figure generating programs;

the figure pattern file (7) comprises pattern data of figure structural elements which are extracted corresponding to coded figure structural elements;

the coded figure generating conditions and figure generating data are input, the figure generating conditions are recognized by referring to the parts file (4) using the coded input of figure generating conditions and figure structural elements and the relevant graph generating program is started;

the figure generating condition codes, figure structural element codes and figure generating program are developed on the development table (8) to edit the figure; and

the edited figure is displayed by extracting the pattern data of figure structural elements from the figure pattern file (7).

5. A network system according to claims 1, 2, 3 and 4, wherein each terminal unit comprises a display screen file (5) for controlling the conversation file which stores information to confirm the program to be started and the file inicluding the documents to be updated and a program download storing part (10) for transferring and loading the programs of the other terminal units in the self terminal unit;

the program file (6) comprises a conversation sensor program for deciding programs to be started through conversation with an operator, the download describing column for deciding necessity or unnecessity of dlownload of program to the self terminal unit from the other terminal when the program in the other terminal is to be used in the self terminal unit as the attribute information of various programs in the conversation file and a function to realize program download to the self terminal unit from the other terminal unit in case the program download is necessary based on "necessity" described in the download describing column or execute program processing in the other terminal unit when "unnecessity" is described in the download describing column.

6. A network system according to claim 5, comprising a download decision program for deciding necessity or unnecessity of program download and a transfer request program for issuing transfer request of object program when download is necessary.

7. A network system according to claims 1, 2, 3 and 4, comprising the functions:
the self terminal unit receives transfer of the program required for conversational type display screen processing from the other terminal unit, on the occasion of processing the screens opened for use in the other terminal units in the self terminal unit through the conversational procedures, the other terminal unit transfers the display screen in accordance with the instruction issued from the self terminal unit, and the self terminal unit processes the display screen based on the tranferred program and display screen.

8. A domain control method in a network system according to claims 1, 2, 3 and 4, wherein the domains for storing data are defined, the parts information combining such domain and the necessary processing function (11) to be applied to such domain is generated and is stored in the parts file (4), each parts information is extracted from the parts file during processings and is then developed on the development table (8), and the processing function (11) to be coupled with each developed domain is called to execute the processing for relevant domain.

9. A schedule control graph generating method in a network system according to claims 1, 2 and 3, wherein the program file (6) comprises a schedule control program and a terminal unit comprises a buffer for storing old schedule data already generated and the newly added or updated schedule data, generates a new schedule data by OR of the old schedule data and newly updated or added schedules and realizes graphic display of new schedules based on the new schedule data.

10. A scheducle control graph generating method according to claim 9, wherein a name table for storing coded display position, duration of graph and names of schedules in the graph display of time schedule setting the schedules based on new schedule data is provided and graphic display is realized based on the codes on the name table.

11. A network system according to claims 1 and 2, comprising a display screen number input part for designating the display screen number for display to the display screens stored in the display screen file (5), a continuous display screen generating part for continuously displaying a plirality of screens designated and a function for continuously displaying the screens in accordance with the designated numbering.

12. A network system according to claim 11, comprising a multi-window system which is capable of designating a plurality of screens for multi-window display to the desired screens stored in the display screen file (5), wherein when the screen for window display is designated for the desired display screen, the designated screen number is written in the desired display scrren data and when it is read that the designated screen number is written, while the data of desired screen is developed on the development table, the window is opened and the display scrren data of designated screen number is read from the screen file for the window display and when a plurality of window screens are designated, the continuous paging is carried out in the sesignated sequence and each page is multi-window displayed in the sequence of the numbering for page cutting.

13. A network system according to claims 11 and 12, wherein a screen number replace edition processing part is provided and thereby the designated page numbers of display screen may be replaced depending on the display of screens.

14. A network system according to claims 11 and 12, wherein a continuous paging cutting process part which is capable of designating display domain and changing display speed of display screen is provided and thereby the display domain of a screen, display switching speed of continuous display, display start page and end page can respectively be selected during the continuous screen display.

# Fig.1

**1** INPUT UNIT

**2** DATA INPUT PART
- CODED DATA
- REAL DATA
- DISPLAY SCREEN NO.
- OTHERS

FROM THE OTHER TERMINAL UNITS

**3** INPUT DATA ANALYZING PART
- CODE ANALYSIS
- SHARING OF MESSAGES
- START OF PROGRAM
- OTHERS

**4** PARTS FILE

GENERATING CONDITION CODES

| CODE | PARTS NAME |
|------|------------|
| A 001 | BAR GRAPH |
| ---- | ---------- |

STRUCTURAL ELEMENT CODE

| CODE | PARTS NAME |
|------|------------|
| A 011 | AND CIRCUIT DIAGRAM |
| ---- | ---------- |

AREA CONDITION CODE

| CODE | PARTS NAME |
|------|------------|
| S1 | AREA NAME |
| ---- | ---------- |

**10** DOWNLOAD PROGRAM STORING PART

**11** PROCESSING FUNCTION

**7** FIGURE PATTERN FILE

| CODE | ATTRIBUTE | PATTERN DATA |
|------|-----------|--------------|
| B 001 | WHITE | ---- |
| B 002 | | ---- |
| ---- | ---- | ---- |
| B 010 | AND CIRCUIT | ---- |
| ---- | ---- | ---- |

**8** DEVELOPMENT TABLE
- CODED DATA REAL DATA DEVELOPMENT
- PROGRAM DEVELOPMENT
- EDITING PROCESS

POLYGONAL LINE

**5** DISPLAY SCREEN FILE (TERMINAL OUTPUT FILE)

SCREEN OF CONTENTS

| SCREEN NO. | NAME OF SCREEN |
|------------|----------------|
| G 01 | GRAPH GENERATION |
| -- | --------------- |

GENERATED FIGURE

| SCREEN NO. | NAME OF SCREEN |
|------------|----------------|
| G 10 | GRAPH OF SALES AMOUNT |
| -- | --------------- |

CONVERSATION GRAPH

| SCREEN NO. | NAME OF SCREEN |
|------------|----------------|
| G 100 | --------------- |
| -- | --------------- |

**9** OUTPUT PROCESSING PART

**15** DISPLAY OUTPUT PROCESSING PART

**16** PRINT PROCESSING PART

**17** TERMINAL OUTPUT PROCESSING PART

**12** DISPLAY UNIT

**13** PRINTING PAPER

THE OTHER TERMINAL UNITS

**6** PROGRAM FILE

PROGRAM FILE

| CODE | NAME |
|------|------|
| P 001 | BAR GRAPH |
| ---- | ---------- |

# Fig. 2

# Fig. 3

# Fig. 4

A NETWORK SYSTEM

50

51

53

54

PBX

VCOD 52-1

VCOD 52-2

VCOD 52-3

DDIM

MD

Fig.5

TERMINAL UNIT A

① UPDATE OF CONTROL FILE
② REQUEST OF CONTROL FILE CONTENTS
③ TRANSMISSION OF CONTROL FILE CONTENTS
④ REQUEST OF GENERATED GRAPH
⑤ TRANSMISSION OF GENERATED GRAPH

TERMINAL UNIT B

DB

⑤
④
①

DB

TERMINAL UNIT C

②

CONTROL CENTER    56

③

55 NETWORK

DB

DB

DB CONTROL FILE

EP 0 451 282 A1

# Fig.6

| PROCESSING IN TERMINAL UNIT A | NETWORK (PUBLIC LINE NETWORK | PROCESSING IN TERMINAL UNIT B |

PROCESSING START REQUEST

(RECEPTION)    (1)

(TRANSMISSION)

START OF PROCESSING

TRANSFER OF INITIAL SCREEN (SCREEN ①)
INTEGRATED SCREEN RESPONSE PROCESSING TRANSFER (① ②)

(2)    (RECEPTION)

(TRANSMISSION)

DISPLAY OF SCREEN (SCREEN ①) (3)

OPERATOR INPUTS OPERATOR NAME (4)

SCREEN RESPONSE PROCESSING ① (5)

DISPLAY OF SCREEN (SCREEN ②) (6)

OPERATOR INPUTS MENU NUMBER (7)

SCREEN RESPONSE PROCESSING ② (8)

(RECEPTION)    (9)

(TRANSMISSION)

DESIGNATED PROCESSING IS CARRIED OUT

TRANSFER OF PROCESSING RESULT

(11)    (RECEPTION)    (12)

(TRANSMISSION)

DISPLAY OF SCREEN (SCREEN ③)

END      END

(OTHER TERMINAL UNIT)      (SELF TERMINAL UNIT)

# Fig.7

(A)

INTEGRATED SCREEN RESPONSE PROCESSING①

| INPUT OPERATION —— NEXT PROCESSING |
|---|
| 1. INPUT OF OPERATOR —— "INPUT MENU NUMBER" IS DISPLAYED<br>    NAME |

(B)

INTEGRATED SCREEN RESPONSE PROCESSING②

| INPUT OPERATION —— NEXT PROCESSING |
|---|
| 1. INPUT NO. IS 1. —— START OF DAILY SALES AMOUNT PROCESSING<br>2. INPUT NO. IS 2. —— START OF WEEKLY SALES AMOUNT PROCESSING<br>3. INPUT NO. IS 3. —— START OF MONTHLY SALES AMOUNT PROCESSING<br>4. INPUT NO. IS 4. —— START OF ANNUAL SALES AMOUNT PROCESSING |

# Fig. 8

SELF TERMINAL UNIT

# Fig.9

CONVERSATION
SENSOR PROGRAM

DOWNLOAD
DECISION PROGRAM

TRANSFER
REQUEST PROGRAM

CONVERSATION
FILE

DOWNLOAD
PROGRAM
STORING PART

DOWNLOAD
CONTROL PART

MEMORY

EP 0 451 282 A1

## Fig.10 A

```
PROCESSING NAME: CALCULATION PROCESSING
                    (KEISAN-PRO 1)
•PROGRAM NAME    : KEISAN-PRO1
•STORING TERMINAL : TOKYO TERMINAL 56
•PUBLIC LINE NO 1  : 03-123-4567
•NECESSITY OR
UNNECESSITY OF
DOWNLOAD          : NECESSITY
•CONERSATIONAL INFORMATION
                   KEISAN-PRO1
                   DATA-FILE 2.
                   Y.
                   N.
                   PRINTER
```
92

```
PROCESSING NAME: STATISTIC PROCESSING
•PROGRAM NAME    : TOKEI-PRO 5
•STORING TERMINAL : OHSAKA TERMINAL 34
•PUBLIC LINE NO.  : 06-123-4567
•NECESSITY OR
UNNECESSITY OF
DOWNLOAD          : NECESSITY
•CONVERSATIONAL INFORMATION
                   TOKEI-PRO 5
                   |
                   |
                   |
                   |
```
93

## Fig.10B

94

```
DATA FILE NAME?= DATA-FILE 2
OUTPUT OF RESULT [y/N] = Y
STORING OF DATA [y/N]  = N
OUTPUT UNIT            = PRINTER
```

# Fig.11

S

PROGRAM START REQUEST IS ISSUED BY SOME EVENTS — ①

② CONVERSATION SENSOR PROGRAM READS ATTRIBUTE INFORMATION OF PROGRAM FROM WHICH THE START REQUEST IS ISSUED FROM THE CONVERSATION FILE

IF OBJECT PROGRAM EXISTS IN THE OTHER TERMINAL UNIT — ③

— YES

PROCESSING FOR CONNECTING THE LINE TO THE OTHER TERMINAL UNIT ④

IF PROGRAM WHICH REQUIRES DOWNLOAD? ⑤

— YES

DOWNLOAD PROCESSING ⑥

PROCESSING FOR SEPARATING THE LINE FROM THE OTHER TERMINAL UNIT ⑦

— END

— NO (CONVERSATION WITH THE OTHER TERMINAL UNIT)

START OF THE PROGRAM (OF THE OTHER TERMINAL UNIT) ⑧

W LOOPED UNTIL THE END MESSAGE IS TRANSMITTED FROM THE STARTED PROGRAM ⑨

IF STARTED PROGRAM IS IN THE CONDITION WAITING FOR INPUT? ⑩

— YES

NECESSARY INFORMATION IS EXTRACTED FROM CONVERSATION FILE ⑪

INPUT INFORMATION IS SENT TO THE STARTED PROGRAM ⑫

PROCESSING FOR SEPARATING THE LINE FROM THE OTHER TERMINAL UNIT ⑬

— END

— NO (WHEN THE STARTED PROGRAM EXISTS IN THE SELF TERMINAL UNIT)

— NO (WITHOUT PROCESSING)

CONVERSATIONAL PROCESSING IN THE SELF TERMINAL UNIT ⑭

E

Fig.12

# Fig.13

120

NEW SCHEDULE BUFFER                                    REMAINDER

| TIME | 9 | 10 | 11 | 12 | 13 | 14 | 15 | 16 | 17 | |
|---|---|---|---|---|---|---|---|---|---|---|
| SCHEDULE BIT | 0 | 0 | 0 | 0 | 0 | 1 | 1 | 0 | 0 | 0 |

121

OLD SCHEDULE BUFFER                                    REMAINDER

| TIME | 9 | 10 | 11 | 12 | 13 | 14 | 15 | 16 | 17 | |
|---|---|---|---|---|---|---|---|---|---|---|
| SCHEDULE BIT | 1 | 0 | 0 | 0 | 0 | 0 | 0 | 1 | 0 | 0 |

SCHEDULE CONTROL PART

123          UPDATED SCHEDULE BUFFER          REMAINDER          OR CIRCUIT

| TIME | 9 | 10 | 11 | 12 | 13 | 14 | 15 | 16 | 17 | |
|---|---|---|---|---|---|---|---|---|---|---|
| SCHEDULE BIT | 1 | 0 | 0 | 0 | 0 | 1 | 1 | 1 | 0 | 0 |

124

122

125          SCHEDULE TABLE

| 0 | 1 | SECTION CONFERENCE |
|---|---|---|
| 5 | 2 | DISCUSSION ABOUT SPECIFICATION |
| 7 | 1 | STUDY |

DISPLAY START POSITION          DURATION

(a)  SCHEDULE TABLE GENERATING METHOD

9    10    11    12    13    14    15    16    17    REMAINDER

SECTION CONFERENCE

DISCUSSION ABOUT SPECIFICATION

STUDY

(b)  DISPLAY SCREEN

# Fig.14

GRAPHIC DISPLAY

GENERATION OF NEW SCHEDULE BUFFER — ①

AND OF OLD SCHEDULE BIT AND NEW SCHEDULE BIT IS STORED IN THE FLG. — ②

③ FLG: ON/OFF?

ON

④ MESSAGE OUTPUT "SCHEDULE IS ALREADY SET"

OFF

⑤ OR OF OLD SCHEDULE BIT AND NEW SCHEDULE BIT IS STORED IN THE UPDATED SCHEDULE BUFFER

126 SCHEDULE CONTROL PART

SCHEDULE BIT ON/OFF?

OFF

⑥

ON

127 DISPLAY PART

⑧ DISPLAY POSITION IS LED AS MUCH AS DESIGNATED

LINE IS DRAWN BASED ON THE LENGTH AND A KIND OF LINE DESIGNATED

⑦

END OF SCHEDULE BUFFER ?

NO

YES ⑨

END

# Fig.15

```
                      ┌─────────┐
                      │  START  │
                      └────┬────┘
                           │
                           ▼
           OFF        ╱──────────╲         ①
        ◄────────────  SCHEDULE BIT:
                       ╲  ON/OFF? ╱
                        ╲────────╱
                           │ ON
                           ▼
  ┌──────────────┐   ┌──────────────────┐
  │ DISPLAY      │   │ LINE IS DRAWN    │   ②
  │ POSITION IS  │   │ BASED ON THE     │
  │ LED AS MUCH  │   │ LENDTH AND A KIND│
  │ AS DESIGNATED│   │ OF LINE DESIGNATED│
  └──────────────┘   └────────┬─────────┘
         │                    │
         │            ┌───────▼──────────┐
         │            │ NAME IS DISPLAYED│   ④
         │            │ BASED ON THE     │
         │            │ NAME TABLE       │
         │            └───────┬──────────┘
         │                    │
         └────────────────────┤
                              ▼
            ⑤          ╱──────────╲        NO
                      ╲ END OF SCHEDULE ──────►
                       ╲  BUFFER?  ╱
                        ╲────────╱
                           │ YES
                           ▼
                      ┌─────────┐
                      │   END   │
                      └─────────┘
```

## Fig. 16

Block diagram showing:
- 130 DISPLAY UNIT
- 131 WINDOW CONTROLLER
- 132 DEVELOPMENT TABLE (G 100, G 1, G 2, G 5, G 10)
- 133 SCREEN FILE — SCREEN NO. / SCREEN DATA (G 01, G 02, ..., G 100 → G1, G2, G5, G10)
- 134 CONTINUOUS PAGE CUTTING PROCESSING PART
- 135 PAGE CONTROLLER
- 136 SCREEN SELECTION PROCESSING PART
- 137 POINTING DEVICE
- 138 (SCREEN NUMBER INPUT PART) CONTINUOUS SCREEN GENERATING PART
- 139 PAGE RETRIEVAL PROCESSING PART
- 140 SCREEN NUMBER REPLACING EDITION PROCESSING PART
- 141 SCREEN G100 DISPLAY REQUEST

Flow markers: ①②③④⑤⑥⑦⑧⑨⑩⑪

EP 0 451 282 A1

# Fig.17

START

① SCREEN DISPLAY REQUEST

② DATA IS EXTRACTED FROM THE SCREEN SCREEN FILE AND IS DEVELOPED IN THE DEVELOPMENT TABLE

③ IT IS DECIDED WHETHER A PLURALITY OF SCREEN NUMBERS ARE DESIGNATED TO THE DATA OR NOT

④ PLURAL NUMBERS ARE DESIGNATED?

NO / YES

⑤ DECIDED AS A SINGLE SCREEN

⑦ DECIDED AS CONTINUOUS SCREEN PROCESSING

⑥ DISPLAYED IN THE BASIC WINDOW

⑧ SCREEN ARE DISPLAYED IN THE SEQUENCE OF DESIGNATED NUMBERING BY OPENING THE WINDOW

⑨ PAGE CUTTING IS MADE AUTOMATICALLY

END

32

# Fig.18

```
                    ( START )
                        │
    ┌───────────────────────────────────┐
 ①  │ DISPLAY OF DISPLAY ARE AND        │
    │ CHANGE-OVER SPEED                 │
    │ DESIGNATION OF START PAGE         │
    │ DESIGNATION OF END PAGE           │
    └───────────────────────────────────┘
                        │
    ┌───────────────────────────────────┐
 ②  │ START OF CONTINUOUS PAGE          │
    │ CUTTING PROCESSING IS DECIDED     │
    └───────────────────────────────────┘
                        │
 ③              ◇ STARTED? ◇ ──── NO ────┐
                        │                │
                       YES               │
    ┌───────────────────────────────────┐│
 ④  │ DESIGNATED AREA OF THE FIRST      ││
    │ SCREEN IS DISPLAYED BY REFFERING  ││
    │ TO THE DEVELOPMENT TABLE          ││
    └───────────────────────────────────┘│
                        │                │
 ⑤      ◇ ──── NO ──── DESIGNATED TIME   │
                        HAS PASSED?       │
                       YES               │
    ┌──────────────────┐                 │
 ⑥  │ REFERENCE IS MADE│                 │
    │ TO THE NEXT SCREEN│                │
    └──────────────────┘                 │
                        │                │
 ⑦         ◇ TERMINATED ◇ ───────────────┤
                    ?                     │
                       NO                 │
    ┌──────────────────┐                 │
 ⑧  │ DISPLAY OF THE   │                 │
    │ NEXT SCREEN      │                 │
    └──────────────────┘                 │
                                         │
                                    ( END )
```

# Fig.19A

```
          ┌─────────┐
          │  START  │
          └────┬────┘
               │          CHANGE OF PAGE
    ①      ◇   REQUEST IS ISSUED?
          ╱     ╲
         ╱       ╲─────── NO
          ╲     ╱
           ╲   ╱
            YES
               │
    ②  ┌──────────────────────────────┐
       │CONTENTS OF CONTINUOUS PAGES ARE│
       │DISPLAYED USING NAMES OF SCREENS│
       └───────────────┬──────────────┘
               │
    ③  ┌──────────────────────────┐
       │SCREENS ARE REPLACED IN   │
       │ACCORDANCE WITH CONTENTS  │
       └────────────┬─────────────┘
               │
    ④  ┌──────────────────────────┐
       │OLD DATA IS STORED SEPARATELY│
       └────────────┬─────────────┘
               │
    ⑤  ┌──────────────────────────┐
       │REPLACEMENT OF SCREEN NUMBERS│
       │OF CONTINUOUS SCREENS OF SCREEN│
       │FILE IS CONDUCTED           │
       └────────────┬─────────────┘
               │
          ┌────┴────┐
          │   END   │
          └─────────┘
```

# Fig.19 B

```
          ┌─────────┐
          │  START  │
          └────┬────┘
               │
    ①  ┌──────────────────────────────┐
       │SCREEN OR CONTENT IS DISPLAYED │
       └───────────────┬──────────────┘
               │          CONTINUOUS
    ②      ◇   SCREEN MODE?
          ╱     ╲          NO
         ╱       ╲
          ╲     ╱
           ╲   ╱
            YES    ③
               │
       ┌──────────────────────────┐
       │SCREEN NUMBER IS DESIGNATED│
       └────────────┬─────────────┘
               │
       ┌──────────────────────────┐
       │SCREEN NUMBERS ARE SEQUENTIALLY│
       │REGISTERED TO THE SCREEN FILE│
       └────────────┬─────────────┘
    ④         ⑤   │
          NO    ◇ END?
          ╱     ╲
           ╲   ╱
            YES
               │
          ┌────┴────┐
          │   END   │
          └─────────┘
```

# Fig.20

```
        ( START )
            |
   ┌─────────────────────────────────────────┐
(1)│ CONTINUOUS SCREEN NUMBERS ARE            │
   │ DESIGNATED AND PAGE RETRIEVAL IS ISSUED  │
   └─────────────────────────────────────────┘
            |
   ┌─────────────────────────────────────────┐
   │ SCREEN DATA IS CHECKED IN THE SCREEN     │
   │ FILE,SCREEN NUMBER IS COUNTED            │
(2)│ SEQUENTIALLY AND THE WANTED PAGE IS      │
   │ FOUND                                    │
   └─────────────────────────────────────────┘
            |
       ┌─────────────────┐
   (3) │ SCREEN DISPLAY  │
       └─────────────────┘
            |
        ( END )
```

# Fig.21

INPUT UNIT

150

GRAPH GENERATING SOFTWARE

151

152 DISPLAY UNIT

153 FILE

# Fig.22

160 HAND-WRITTEN FIGURE

| IMAGE SCANNER | → | DATA PROCESSING PART | → | FIGURE FILE | → | DISPLAY PROCESSING PART | → | DISPLAY UNIT |

161    162    163    164    165

166 XY PLOTTER

EP 0 451 282 A1

# Fig. 23

(A)

DISPLAY
SCREEN ①

```
* * * SALES AMOUNT PROCESSING * * *

┌──────────┬──────────────────────┐
│ MENU NO. │ NAME OF PROCESSING   │
├──────────┼──────────────────────┤
│    1     │ DAILY SALES AMOUNT   │
│    2     │ WEEKLY SALES AMOUNT  │
│    3     │ MONTHLY SALES AMOUNT │
│    4     │ ANNUAL SALES AMOUNT  │
└──────────┴──────────────────────┘

INPUT OPERATOR NAME        ⟹  _____
```

(JOB OF OPERATOR)
OPERATOR NAME IS
INPUT

(B)

DISPLAY
SCREEN ②

```
* * * SALES AMOUNT PROCESSING * * *

┌──────────┬──────────────────────┐
│ MENU NO. │ NAME OF PROCESSING   │
├──────────┼──────────────────────┤
│    1     │ DAILY SALES AMOUNT   │
│    2     │ WEEKLY SALES AMOUNT  │
│    3     │ MONTHLY SALES AMOUNT │
│    4     │ ANNUAL SALES AMOUNT  │
└──────────┴──────────────────────┘

INPUT MENU NUMBER          ⟹  _____
```

(JOB OF OPERATOR)
MENU NO. IS INPUT

(C)

DISPLAY
SCREEN ③

```
* * * SALES AMOUNT PROCESSING * * *
* * * END RESULT (DAILY RESULT) * * *

┌──────┬────────┐  ┌──────┬────────┐
│ DATE │ NO. OF │  │ DATE │ NO. OF │
│      │ SALES  │  │      │ SALES  │
├──────┼────────┤  ├──────┼────────┤
│  1   │   10   │  │  11  │   6    │
│  2   │   5    │  │  2   │   1    │
│  3   │   8    │  │  3   │   2    │
│  4   │   3    │  │  4   │   7    │
│  5   │   12   │  │  5   │   9    │
│  10  │   8    │  │  20  │   3    │
└──────┴────────┘  └──────┴────────┘
```

WEEKLY RESULT

MONTHLY RESULT

ANNUAL RESULT

# Fig.24

170

```
┌─────────────────┐        ┌──────────────────────────────┐        ┌─────────────────┐
│ PROCESSING IN   │        │ NETWORK (PUBLIC LINE NETWORK  │        │ PROCESSING IN   │
│ TERMINAL UNIT A │        │                               │        │ TERMINAL UNIT B │
└─────────────────┘        └──────────────────────────────┘        └─────────────────┘
```

(RECEPTION)

PROCESSING START REQUEST

(1)

(TRANSMISSION)

START OF PROCESSING TRANSFER OF INITIAL SCREEN (SCREEN ①)

(RECEPTION)

(2)

DISPLAY OF SCREEN (SCREEN ①)

(TRANSMISSION)

OPERATOR INPUTS OPERATOR NAME

(RECEPTION)

(3)

TRANSFER OF MESSAGE

(TRANSMISSION)

(4)

(RECEPTION)

(TRANSMISSION)

DISPLAY OF SCREEN (SCREEN ②)

OPERATOR INPUTS MENU NUMBER

(RECEPTION)

(5)

PROCESSING IS CARRIED OUT IN ACCORDANCE WITH MENU NUMBER

(TRANSMISSION)

TRANSFER OF PROCESSING RESULT

(6)

(RECEPTION)

(7)

(TRANSMISSION)

DISPLAY OF SCREEN (SCREEN ③)

END

(OTHER TERMINAL UNIT)

END

(SELF TERMINAL UNIT)

39

# INTERNATIONAL SEARCH REPORT

International Application No PCT/JP90/01169

**I. CLASSIFICATION OF SUBJECT MATTER** (if several classification symbols apply, indicate all) 4

According to International Patent Classification (IPC) or to both National Classification and IPC

Int. Cl$^5$     G06F15/72

**II. FIELDS SEARCHED**

| Minimum Documentation Searched 7 | |
|---|---|
| Classification System | Classification Symbols |
| IPC | : G06F15/72, G06F13/00, G06F9/06 |

Documentation Searched other than Minimum Documentation
to the Extent that such Documents are Included in the Fields Searched 8

| | |
|---|---|
| Jitsuyo Shinan Koho | 1926 – 1990 |
| Kokai Jitsuyo Shinan Koho | 1971 – 1990 |

**III. DOCUMENTS CONSIDERED TO BE RELEVANT** 9

| Category * | Citation of Document, 11 with indication, where appropriate, of the relevant passages 12 | Relevant to Claim No. 13 |
|---|---|---|
| Y | JP, A, 63-36387 (NEC Corp.), 17 February 1988 (17. 02. 88), Fig. 1 (Family: none) | 1 – 7 |
| Y | JP, A, 63-129481 (Toshiba Corp.), 1 June 1988 (01. 06. 88), Fig. 1 (Family: none) | 1 – 7 |
| Y | JP, A, 62-211769 (Fujitsu Ltd.), 17 September 1987 (17. 09. 87), Fig. 1 (Family: none) | 1 – 7 |
| Y | JP, A, 63-280369 (Mitsubishi Electric Corp.), 17 November 1988 (17. 11. 88), Fig. 1 (Family: none) | 1 – 7 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| November 8, 1990 (08. 11. 90) | November 26, 1990 (26. 11. 90) |
| International Searching Authority | Signature of Authorized Officer |
| Japanese Patent Office | |

Form PCT/ISA/210 (second sheet) (January 1985)